# EUROPÄISCHE PATENTSCHRIFT

(11) **EP 2 157 390 B1**
(45) Veröffentlichungstag und Bekanntmachung des Hinweises auf die Patenterteilung: **25.06.2014**
(21) Anmeldenummer: 09010516.4
(22) Anmeldetag: 14.08.2009
(51) Int. Cl.: F28D 7/10, F28D 7/16, F28F 9/26, A23C 3/033, A23L 3/22

(54) **Röhrenwärmeüberträger, Doppelumlenkbogen für Röhrenwärmeüberträger, Adapter für Röhrenwärmeüberträger sowie System und Verfahren zur Wärmeübertragung zwischen wenigstens zwei Lebensmittelströmen**
Pipe heater, deflection curve for same, adapter for same, system and method for transferring heat between at least two food flows
Caloporteur tubulaire, double arc de déflexion pour caloporteur tubulaire, adaptateur pour caloporteur tubulaire ainsi que système et procédé de transmission thermique entre au moins deux flux d'aliments

(30) Priorität: 18.08.2008 DE 102008038140
(43) Veröffentlichungstag der Anmeldung: 24.02.2010
(73) Patentinhaber: Krones AG, 93073 Neutraubling (DE)
(72) Erfinder: Justl, Johann, 93049 Regensburg (DE)
(74) Vertreter: Schuster, Thomas

(56) Entgegenhaltungen:
- CH-A- 552 185
- DE-C- 214 381
- DE-C- 838 522
- FR-A- 1 239 842
- FR-A1- 2 582 094
- US-A- 1 581 384
- US-A- 1 717 395
- US-A- 3 176 761
- US-B1- 7 368 139

## Beschreibung

Die Erfindung betrifft einen Röhrenwärmeüberträger zur unmittelbaren Wärmeübertragung zwischen wenigstens zwei Lebensmittelströmen nach dem Oberbegriff des Anspruchs 1, einen Doppelumlenkbogen für Röhrenwärmeüberträger zur unmittelbaren Wärmeübertragung zwischen wenigstens zwei Lebensmittelströmen nach Anspruch 4, einen Adapter für Röhrenwärmeüberträger zur unmittelbaren Wärmeübertragung zwischen wenigstens zwei Lebensmittelströmen nach Anspruch 7, ein System zur unmittelbaren Wärmeübertragung zwischen wenigstens zwei Lebensmittelströmen nach Anspruch 10, und ein Verfahren zur unmittelbaren Wärmeübertragung zwischen wenigstens zwei Lebensmittelströmen nach Anspruch 12.

In der Lebensmittelindustrie ist es häufig erforderlich, einem flüssigen Lebensmittel Wärme zu entziehen oder zuzuführen. Dazu werden herkömmlich beispielsweise Platten- oder Röhrenwärmeüberträger eingesetzt. Bei der Verwendung von Röhrenwärmeüberträgern wird häufig ein Heiz- oder Kühlmedium bzw. Wärmespeicher bzw. Wärmeträger verwendet, das zur Abgabe und/oder Aufnahme von Wärme verwendet wird. Zum Zwecke der Energieeinsparung kann dieses Wärmeübertragungsmedium dann für eine weitere Wärmeübertragung an einer anderen Stelle des Herstellungsprozesses eingesetzt werden. So kann beispielsweise in einem nachgelagerten Verfahrensschritt die vorab vom Wärmeübertragungsmedium auf den Lebensmittelstrom übertragende Wärme diesem durch Rückübertragen auf das Übertragungsmedium wieder entzogen werden.

In der Druckschrift US 3,930,536 wird ein gattungsfremder Doppelumlenkbogen für einen Röhrenwärmeüberträger vorgeschlagen. Hierbei wird die Wärme von einem Wärmeübertragungsmedium auf ein Produkt, insbesondere Klärschlamm, übertragen oder umgekehrt.

Ferner offenbart das Dokument GB 22,670 einen gattungsfremden Doppelröhren-Verdampfer bzw. -Verflüssiger mit strömungsgetrennter Umlenkung.

Die Verwendung eines Wärmeübertragungsmediums ist bei Lebensmitteln insofern nachteilig, als bei einem kontinuierlichen Herstellungsprozess unter Umständen eine weitere Wärmeübertragungsvorrichtung erforderlich ist. Darüber hinaus kann die Verwendung eines Wärmeträgers aufgrund erforderlicher Zusatzausstattung, wie beispielsweise Tanks, Rohrleitungen und Pumpen, aufwendig und kostenträchtig sein. Zudem ist mit Energieverlusten, beispielsweise durch Wärmeabstrahlung und Strömungswiderstände, zu rechnen.

Daher ist, beispielsweise in der Druckschrift DE 94 03 13 U1, ein Röhrenwärmeüberträger vorgeschlagen worden, bei dem Wärme von einem ersten Lebensmittelstrom bzw. von einem ersten flüssigen Produkt unmittelbar auf einen zweiten Lebensmittelstrom bzw. ein zweites flüssiges Produkt ohne Verwendung eines Übertragungsmediums übertragen wird (Lebensmittel-gegen-Lebensmittel-Behandlung).

In der Praxis wird zur Vergrößerung der Wärmeübertragungsfläche eines Wärmeüberträgersystems zumeist eine Mehrzahl von Röhrenwärmeüberträgern in Serie geschaltet. Hinsichtlich der Verbindung zwischen zwei Röhrenwärmeüberträgern zur Wärmeübertragung zwischen einem Lebensmittel und einem Wärmeübertragungsmedium offenbart das Dokument DE 696 12 998 T2 ein Röhrenwärmeüberträgersystem mit Umlenkbögen. Dabei besteht jeder Röhrenwärmeüberträger aus einer Mehrzahl von Wärmeübertragungsrohren, die von einem äußeren Mantelrohr umgeben sind. Die Wärmeübertragungsrohre sind zur Ausbildung eines Produkteinsatzes vereinigt, indem eine Abdeckplatte an jedem Endabschnitt der Wärmeübertragungsrohre angeordnet ist. Die verschiedenen Produkteinsätze sind mittels Umlenkbögen bzw. Produktkrümmern miteinander verbunden, wodurch ein Röhrenwärmeüberträger mit einem weiteren verbunden ist. Dabei wird der in den Produkteinsätzen geführte Lebensmittelstrom durch den Umlenkbogen den Produkteinsätzen eines weiteren Röhrenwärmeüberträgers zugeführt.

Das den Produkteinsatz umgebende Mantelrohr steht seinerseits mit dem Mantelrohr eines weiteren Wärmeüberträgers durch einen Winkelrohrabschnitt in Verbindung. So kann das Wärmeübertragungsmedium als zweiter Flüssigkeitsstrom über den Winkelrohrabschnitt dem nächsten Wärmeüberträger zugeführt werden. Hierbei werden der erste und der zweite Flüssigkeitsstrom beim Übergang von einem zum anderen Wärmeüberträger derart getrennt voneinander gehalten, dass beim Durchströmen des Umlenkbogens keine Wärmeübertragung zwischen den Flüssigkeitsströmen stattfindet.

Somit gibt es bei keiner der vorstehend diskutierten Wärmeübertragungen von Lebensmittel zu Wärmeübertragungsmedium oder umgekehrt bzw. Lebensmittel zu Lebensmittel mittels eines Röhrenwärmeüberträgers eine Wärmeübertragung während des Durchströmens eines Umlenkbogens. Dies ist nachteilig, da aufgrund der getrennten Strömungsführung die Wärmeübertragung auf den Innenraum des Mantelrohrs beschränkt ist.

Ferner weist der in der DE 696 12 998 T2 vorgeschlagene Umlenkbogen den Nachteil auf, dass die durch die Betriebstemperaturen bedingten Temperaturschwankungen eine Wärmeausdehnung der Wärmeübertragungsrohre zeitigen, die ihrerseits zu Materialspannungen führt. Diese Materialspannungen können letztlich zu einer verkürzten Lebensdauer wegen Materialermüdung oder erhöhter Anfälligkeit für Spannungsrisskorrosion führen.

Darüber hinaus ist es strömungstechnisch ungünstig, wenn der Lebensmittelstrom nach Durchströmen des Umlenkbogens auf eine Abdeckplatte der Wärmeübertragungsrohre mit ebener Oberflächengestalt trifft. Diese bildet einen verhältnismäßig großen Strömungswiderstand aus und bietet Ablagerungsstellen für im Lebensmittelstrom transportierte Feststoffpartikel.

Dokument US 1 581 384 A betrifft einen Wärmeüberträger zur Übertragung von Wärme von einer Flüssigkeit auf eine andere nach dem Gegenstrom-Prinzip. Dabei weist der Umlenkbogen des Röhrenwärmeüberträgers Spalten und Flansche innerhalb des Umlenkbogens auf. Darüber hinaus befinden sich Abstützungselemente im Bereich des Strömungsweges im Mantelraum des Röhrenwärmeüberträgers. Hierdurch ist dieser Röhrenwärmeüberträger nicht zur unmittelbaren Übertragung von Wärme zwischen zwei Lebensmittelströmen geeignet und daher gattungsfremd.

Dokument FR 1 239 842 A offenbart einen Röhrenwärmeübertrager und ein Verfahren nach dem Oberbegriff der Ansprüche 1 und 12 zur unmittelbaren Wärmeübertragung zwischen wenigstens zwei Lebensmittelströmen (Milch oder fettige Produkte), wobei Wärme von einem ersten Lebensmittelstrom auf einen zweiten Lebensmittelstrom unmittelbar übertragen wird. Dabei wird ein Lebensmittelstrom beim Einströmen in den ersten Strömungsweg des Doppelumlenkbogens nicht zu einem Strom zusammengefaßt. Darüber hinaus wird auch nicht offenbart, dass derselbe Lebensmittelstrom beim Ausströmen aus dem ersten Strömungsweg des Doppelumlenkbogens in wenigstens einen Teilstrom aufgeteilt wird.

Der Erfindung liegt daher die Aufgabe zugrunde, einen gattungsgemäßen Röhrenwärmeüberträger zur unmittelbaren Wärmeübertragung zwischen wenigstens zwei Lebensmittelströmen, einen Doppelumlenkbogen für einen gattungsgemäßen Röhrenwärmeüberträger zur unmittelbaren Wärmeübertragung zwischen wenigstens zwei Lebensmittelströmen, einen Adapter für einen gattungsgemäßen Röhrenwärmeüberträger zur unmittelbaren Wärmeübertragung zwischen wenigstens zwei Lebensmittelströmen, ein gattungsgemäßes System zur unmittelbaren Wärmeübertragung zwischen wenigstens zwei Lebensmittelströmen und ein gattungsgemäßes Verfahren zur unmittelbaren Wärmeübertragung zwischen wenigstens zwei Lebensmittelströmen derart weiterzubilden, dass Wärme zwischen den wenigstens zwei Lebensmittelströmen auch während des Durchströmens eines Umlenkbogens übertragbar ist.

Diese Aufgabe wird in vorrichtungstechnischer Hinsicht durch den Röhrenwärmeüberträger zur unmittelbaren Wärmeübertragung zwischen wenigstens zwei Lebensmittelströmen mit den Merkmalen des Anspruchs 1, den Doppelumlenkbogen für Röhrenwärmeüberträger zur unmittelbaren Wärmeübertragung zwischen wenigstens zwei Lebensmittelströmen mit den Merkmalen des Anspruchs 4, den Adapter für Röhrenwärmeüberträger zur unmittelbaren Wärmeübertragung zwischen wenigstens zwei Lebensmittelströmen mit den Merkmalen des Anspruchs 7 und das System zur unmittelbaren Wärmeübertragung zwischen wenigstens zwei Lebensmittelströmen mit den Merkmalen des Anspruchs 10 gelöst. In verfahrenstechnischer Hinsicht wird die Aufgabe der Erfindung durch das Verfahren zur unmittelbaren Wärmeübertragung zwischen wenigstens zwei Lebensmittelströmen mit den Merkmalen des Anspruchs 12 gelöst.

Erfindungsgemäß wird ein Röhrenwärmeüberträger zur unmittelbaren Wärmeübertragung zwischen wenigstens zwei Lebensmittelströmen vorgeschlagen, wobei der Röhrenwärmeüberträger ein Mantelrohr und wenigstens ein im Innern des Mantelrohrs angeordnetes Wärmeübertragungsrohr aufweist. Dabei ist in dem wenigstens einen Wärmeübertragungsrohr ein erster Lebensmittelstrom führbar. Ferner ist in einem Mantelraum zwischen dem Mantelrohr und dem wenigstens einen Wärmeübertragungsrohr ein zweiter Lebensmittelstrom führbar. Ferner sind der erste Lebensmittelstrom und der zweite Lebensmittelstrom durch wenigstens einen stirnseitigen Endabschnitt des Röhrenwärmeüberträgers separat führbar. Der Endabschnitt weist wenigstens eine erste Durchgangsöffnung auf, die mit dem wenigstens einen Wärmeübertragungsrohr in Fluidverbindung steht. Der Endabschnitt weist zudem wenigstens eine zweite Durchgangsöffnung auf, die mit dem Mantelraum in Fluidverbindung steht.

Erfindungsgemäß wird somit erstmals ein Röhrenwärmeüberträger zur Wärmeübertragung zwischen wenigstens zwei Lebensmittelströmen offenbart, bei dem die wenigstens zwei Lebensmittelströme getrennt voneinander durch den Endabschnitt führbar sind. Hierdurch wird es möglich, einem an den Röhrenwärmeüberträger anschließbaren bzw. angeschlossenen Bauteil, wie beispielsweise einem Umlenkbogen, die beiden Lebensmittelströme getrennt voneinander über ein einziges Anschlussstück bzw. einen einzigen Flansch am Endabschnitt zuzuführen. Somit kann eine konstruktiv aufwendigere und kostenträchtigere Strömungsführung mit zwei Anschlussstücken bzw. Flanschen vermieden werden.

Ein weiterer Vorteil des erfindungsgemäßen Röhrenwärmeüberträgers ist, dass die Wärmeübertragungsfläche bis zum stirnseitigen Endabschnitt erweitert wird, was eine Maximierung der Wärmeübertragungsfläche bedeutet.

Ferner weist der erfindungsgemäße Röhrenwärmeüberträger eine kompakte und somit platzsparende Bauweise auf. Dies vereinfacht eine Stapelung oder Bündelung mehrerer Röhrenwärmeüberträger zu einem Modul. Zudem ist die Anschlussverrohrung dank der parallelen Strömungsführung durch den einen Endabschnitt einfach und preisgünstig gestaltbar. Darüber hinaus weist der Endabschnitt eine Stützfunktion für die Wärmeübertragungsrohre des Röhrenwärmeüberträgers auf.

Dabei ist der Endabschnitt des Röhrenwärmeüberträgers hinsichtlich des ersten Lebensmittelstroms in Ausströmrichtung aus dem Röhrenwärmeüberträger gesehen als ein Strömungssammler ausgebildet, und/oder der Endabschnitt des Röhrenwärmeüberträgers hinsichtlich des ersten Lebensmittelstroms in Einströmrichtung in den Röhrenwärmeüberträger gesehen ist als ein Strömungsteiler ausgebildet.

Dies ermöglicht, den ersten Lebensmittelstrom von einer Mehrzahl von Teilströmen zu einem Gesamtstrom zusammenzuführen. Aufgrund der Zusammenführung wird die Gestaltung der Weiterführung des ersten Lebensmittelstroms als Gesamtstrom, beispielsweise in einem Anschlussstück, konstruktiv vereinfacht. Zudem kann das Anschlussstück einfach und kostengünstig gestaltet werden.

Die Zusammenfassung der Mehrzahl der Lebensmittelteilströme zu einem Gesamtstrom ermöglicht ferner das Vermischen des Lebensmittelstroms. Hierdurch können mögliche Temperaturunterschiede in den Teilströmen des ersten Lebensmittelstroms ausgeglichen werden. Durch die so erzielte homogene Temperatur im Lebensmittelstrom wird eine hohe Wärmeübertragungseffizienz erhalten.

Wenn der Endabschnitt des Röhrenwärmeüberträgers hinsichtlich des ersten Lebensmittelstroms in Einströmrichtung in den Röhrenwärmeüberträger gesehen als ein Strömungsteiler ausgebildet ist, ergeben sich dieselben Vorteile hinsichtlich der Anschlussseite wie vorstehend diskutiert. Zudem wird dank einer Aufteilung der Strömung in mehrere Teilströme, welche die Wärmeübertragungsrohre des Röhrenwärmeüberträgers durchströmen, die Wärmeübertragungsfläche des Röhrenwärmeüberträgers vergrößert und somit die Wärmeübertragungseffizienz gesteigert.

Vorteilhafte Weiterbildungen des erfindungsgemäßen Röhrenwärmeüberträgers sind Gegenstand der abhängigen Ansprüche 2 und 3.

So kann ein Teilabschnitt des wenigstens einen Endabschnitts des Röhrenwärmeüberträgers im Wesentlichen becherförmig, halbkugelförmig, kegelförmig, trichterförmig oder teilrotationsellipsoidförmig ausgebildet sein.

Mittels dieser Gestaltung des Anströmprofils wird der Strömungswiderstand gegenüber einer ebenen Abdeckplatte wesentlich verringert. Dies rührt daher, dass das anströmende Lebensmittel an praktisch keiner Stelle senkrecht auf die Oberfläche des Endabschnitts auftrifft. Insbesondere in den äußeren Bereichen erfolgt die Anströmung in im Wesentlichen tangentialer Richtung zur Oberfläche, wodurch der Strömungswiderstand beim Übergang der Strömung vom ersten Strömungsweg zum wenigstens einen Wärmeübertragungsrohr oder umgekehrt verringert wird.

Darüber hinaus wird insbesondere bei einem Lebensmittelstrom, der Feststoffpartikel aufweist und/oder dessen Inhaltsstoffe zum Anbrennen oder sog. Fouling neigen, eine Anlagerung von Partikel und Krustenbildung vermieden. Hierdurch verringert sich die Reinigungshäufigkeit des Röhrenwärmeüberträgers, und die Betriebszeiten werden verlängert. Durch die vorgeschlagene Konstruktion wird zudem die Bildung von Keimherden und hygienisch nachteiligen Biofilmen unterdrückt oder zumindest weitgehend eingeschränkt.

Der Röhrenwärmeüberträger kann derart ausgebildet sein, dass er mit einem Doppelumlenkbogen in Fluidverbindung bringbar ist. Hierdurch lassen sich die Vorteile des erfindungsgemäßen Röhrenwärmeüberträgers und des erfindungsgemäßen Doppelumlenkbogens kombinieren.

Erfindungsgemäß wird ferner ein Doppelumlenkbogen für Röhrenwärmeüberträger zur unmittelbaren Wärmeübertragung zwischen wenigstens zwei Lebensmittelströmen offenbart, wobei der Doppelumlenkbogen zwei getrennte Strömungswege aufweist. Dabei ist ein erster Lebensmittelstrom im ersten Strömungsweg des Doppelumlenkbogens führbar. Weiter ist ein zweiter Lebensmittelstrom im zweiten Strömungsweg des Doppelumlenkbogens führbar. Zwischen den beiden Strömungswegen des Doppelumlenkbogens ist Wärme übertragbar.

Erfindungsgemäß wird somit erstmals ein Doppelumlenkbogen für Röhrenwärmeüberträger offenbart, bei dem zwei separate Lebensmittelströme in einem Umlenkbogen geführt werden. Dabei ist die Wärmeübertragung zwischen wenigstens zwei Lebensmittelströmen auch während des Durchströmens des Doppelumlenkbogens möglich. Hierdurch wird die vorhandene Wärmeübertragungsfläche vorteilhaft vergrößert. Die beiden Lebensmittelströme stehen nicht in Fluidverbindung miteinander.

Aufgrund der zusätzlichen Wärmeübertragungsfläche im Doppelumlenkbogen können die Abmessungen des Röhrenwärmeüberträgers kompakt gehalten und die Herstellungskosten vermindert werden.

Ferner ist im Doppelumlenkbogen der erste Strömungsweg innerhalb des zweiten Strömungswegs angeordnet.

Dies ermöglicht nicht nur eine effiziente Wärmeübertragung ohne Wärmeabstrahlverluste des ersten Strömungswegs, sondern auch eine platzsparende Anordnung der beiden Strömungswege, beispielsweise als "Rohr-in-Rohr"-Anordnung.

Wenigstens ein Endabschnitt des Doppelumlenkbogens ist als ein Flansch ausgebildet. Dabei weist der Flansch wenigstens eine erste Durchgangsöffnung auf, die mit dem ersten Strömungsweg in Fluidverbindung steht. Zudem weist der Flansch wenigstens eine zweite Durchgangsöffnung auf, die mit dem zweiten Strömungsweg in Fluidverbindung steht.

Die Ausbildung des Doppelumlenkbogen-Endabschnitts als Flansch erlaubt eine einfache Montage des Doppelumlenkbogens an den Röhrenwärmeüberträger, beispielsweise durch Anschrauben.

Ferner ist der Flansch als Abstandhalter für einen den ersten Strömungsweg begrenzenden inneren Rohrbogen und einen den zweiten Strömungsweg begrenzenden äußeren Rohrbogen ausgebildet.

Hierdurch sind keine Einbauten im zweiten Strömungsweg außerhalb der Endabschnitte erforderlich, was den Strömungswiderstand des Strömungswegs nochmals verringert und Feststoffanlagerungen an der Innenfläche des Stroms vermeidet. Zudem wird der werksseitige Zusammenbau des Doppelumlenkbogens vereinfacht und kostengünstiger.

Vorteilhafte Weiterbildungen des erfindungsgemäßen Doppelumlenkbogens sind Gegenstand der abhängigen Ansprüche 5 und 6.

So kann ein den ersten Strömungsweg begrenzender innerer Rohrbogen von einem den zweiten Strömungsweg begrenzenden äußeren Rohrbogen mittels wenigstens eines Abstandhalters beabstandet sein, wobei der Abstandhalter die beiden Rohrbögen wenigstens punktuell berührt.

Die nur im Wesentlichen punktuell bzw. punktförmig bzw. punktweise ausgebildeten Berührungsstellen zwischen dem Abstandhalter und den beiden Rohrbögen bilden einen minimalen Strömungswiderstand im Vergleich zu herkömmlichen Einbauten zur gegenseitigen Abstützung der Rohrbögen im Doppelumlenkbogen. Hierdurch sind geringere Pumpenkapazitäten erforderlich, und der Energieeintrag in das Lebensmittel wird vermindert. Dies senkt den Energieverbrauch und vermeidet ein unnötiges und möglicherweise unerwünschtes Erwärmen des durchströmenden Lebensmittels.

Eine weitere Folge des minimalen Strömungswiderstands und des damit verbundenen abgesenkten Energieeintrags durch Pumpen ist die Einwirkung minimaler Scherkräfte auf den Lebensmittelstrom bzw. das flüssige Lebensmittel. Hierdurch wird das Lebensmittel schonend behandelt und mögliche qualitative Verschlechterungen, die mit einer Einwirkung von Scherkräften einhergehen kann, stark vermindert oder sogar vermieden.

Ferner weisen gerade die im wesentlichen punktuell ausgebildeten Berührungsstellen den Vorteil auf, dass eine Ansammlung von im flüssigen Lebensmittel enthaltenen Feststoffen konstruktionsbedingt stark vermindert oder sogar verhindert wird. Demnach wird Fouling verhindert oder wirksam verzögert, und die Wärmeübertragungsfähigkeit bleibt länger auf einem hohen Niveau. Dies hat wiederum hohe Volumendurchsätze und lange Betriebszeiten des Doppelumlenkbogens zur Folge. Damit gehen auch seltenere Reinigungsintervalle einher, was wiederum eine verbesserte Auslastung ermöglicht.

Im Hinblick auf die Reinigung des erfindungsgemäßen Doppelumlenkbogens ist zudem vorteilhaft, dass Verunreinigungen dank der im wesentlichen punktuell ausgebildeten Berührungsstellen leichter entfernt werden können, sofern sie sich überhaupt anlagern. Insbesondere aus mikrobiologischer Sicht bietet die erfindungsgemäße Lösung eine optimale Konstruktion, da die Festsetzung von Keimen und anderen Organismen im Strömungsweg des Lebensmittels weitestgehend unterbleibt. Damit kann wiederum der Vermehrung von produktschädlichen Keime und der Ausbildung schwer entfernbarer Biofilme wirksam entgegengewirkt werden. Auch die mikrobiologisch verbesserten Gegebenheiten dienen letztlich der Aufrechterhaltung einer optimalen Produktqualität.

So kann der Abstandhalter als wenigstens eine Rippe oder Finne ausgebildet sein. Dies stellt eine konstruktiv einfache und strömungsgünstige Lösung zur Verwirklichung des Abstandhalters dar, die kostengünstig realisiert werden kann.

Der Doppelumlenkbogen kann derart ausgebildet sein, dass er mit wenigstens einem Röhrenwärmeüberträger in Fluidverbindung bringbar ist.

Hierdurch lassen sich die Vorteile des erfindungsgemäßen Doppelumlenkbogens und des erfindungsgemäßen Röhrenwärmeüberträgers kombinieren.

Erfindungsgemäß wird erstmals ein Adapter für Röhrenwärmeüberträger zur unmittelbaren Wärmeübertragung zwischen wenigstens zwei Lebensmittelströmen offenbart. Dabei weist der Adapter einen ersten Abschnitt mit wenigstens einer Durchgangsöffnung auf, die mit dem wenigstens einen Wärmeübertragungsrohr des Röhrenwärmeüberträgers in Fluidverbindung bringbar ist. Der Adapter weist ferner einen zweiten Abschnitt mit wenigstens einer Durchgangsöffnung auf, die mit dem Mantelraum des Röhrenwärmeüberträgers in Fluidverbindung bringbar ist.

Die vorstehend diskutierten Vorteile des Endabschnitts des erfindungsgemäßen Röhrenwärmeüberträgers gelten analog für den erfindungsgemäßen Adapter.

Ferner erlaubt die Verwendung des erfindungsgemäßen Adapters in Verbindung mit einem Röhrenwärmeüberträger eine Vereinfachung der Wärmeüberträgerkonstruktion. So kann eine Mehrzahl von Funktionen, wie beispielsweise Flansch-, Stütz- und Strömungsleitfunktionen, im Adapter konzentriert werden. Hierdurch wird die Konstruktion eines zugeordneten Röhrenwärmeüberträgers vereinfacht.

Der erste Abschnitt des Adapters ist mit dem ersten Strömungsweg des Doppelumlenkbogens in Fluidverbindung bringbar. Ferner ist der zweite Abschnitt des Adapters mit dem zweiten Strömungsweg des Doppelumlenkbogens in Fluidverbindung bringbar. Hierdurch lassen sich die vorstehend diskutierten Vorteile des erfindungsgemäßen Adapters und des erfindungsgemäßen Doppelumlenkbogens kombinieren.

Vorteilhafte Weiterbildungen des erfindungsgemäßen Adapters sind Gegenstand der abhängigen Ansprüche 8 und 9.

Die Vorteile der vorstehend diskutierten Weiterbildungen des Endabschnitts des erfindungsgemäßen Röhrenwärmeüberträgers gelten analog für die nachstehend diskutierten Weiterbildungen des erfindungsgemäßen Adapters.

So können/kann der erste Abschnitt und/oder der zweite Abschnitt des Adapters in Ausströmrichtung aus dem Röhrenwärmeüberträger gesehen als ein Strömungssammler ausgebildet sein.

Ferner können/kann der erste Abschnitt und/oder der zweite Abschnitt des Adapters in Einströmrichtung in den Röhrenwärmeüberträger gesehen als ein Strömungsteiler ausgebildet sein.

Der erste Abschnitt und/oder der zweite Abschnitt des Adapters können/kann in Einströmrichtung in den Röhrenwärmeüberträger gesehen im Wesentlichen becherförmig, halbkugelförmig, kegelförmig, trichterförmig oder teilrotationsellipsoidförmig ausgebildet sein.

Erfindungsgemäß wird ferner ein System zur unmittelbaren Wärmeübertragung zwischen wenigstens zwei Lebensmittelströmen vorgeschlagen. Das System weist wenigstens einen erfindungsgemäßen Röhrenwärmeüberträger und wenigstens einen erfindungsgemäßen Doppelumlenkbogen auf.

Die vorstehend diskutierten Vorteile des erfindungsgemäßen Röhrenwärmeüberträgers und/oder des erfindungsgemäßen Doppelumlenkbogens gelten analog für das erfindungsgemäße System und dessen Weiterbildungen.

Vorteilhafte Weiterbildungen des erfindungsgemäßen Systems sind Gegenstand des abhängigen Anspruchs 11.

So können/kann der erste Strömungsweg und/oder der zweite Strömungsweg gegenüber dem wenigstens einen Wärmeübertragungsrohr verschiebbar gelagert sein.

Hierdurch können Wärmeausdehnungen des wenigstens einen Wärmeübertragungsrohrs vorteilhaft aufgenommen werden, was Materialschäden durch Spannungen oder Spannungsrisskorrosion vorbeugt.

Ferner kann das System wenigstens einen erfindungsgemäßen Adapter aufweisen. Die vorstehend diskutierten Vorteile des erfindungsgemäßen Adapters gelten analog für das erfindungsgemäße System.

In verfahrenstechnischer Hinsicht wird die Aufgabe der Erfindung durch das erfindungsgemäße Verfahren zur unmittelbaren Wärmeübertragung zwischen wenigstens zwei Lebensmittelströmen gelöst, wobei die Wärme von einem ersten Lebensmittelstrom auf einen zweiten Lebensmittelstrom unmittelbar übertragen wird. Der erste Lebensmittelstrom wird in wenigstens einem Wärmeübertragungsrohr eines Röhrenwärmeüberträgers geführt. Der zweite Lebensmittelstrom wird in einem Mantelraum des Röhrenwärmeüberträgers geführt, wobei der Mantelraum zwischen einem Mantelrohr und dem wenigstens einen Wärmeübertragungsrohr ausgebildet ist. Zudem wird der erste Lebensmittelstrom in einem ersten Strömungsweg eines Doppelumlenkbogens und der zweite Lebensmittelstrom in einem zweiten Strömungsweg des Doppelumlenkbogens geführt. Zwischen dem ersten Lebensmittelstrom im ersten Strömungsweg und dem zweiten Lebensmittelstrom im zweiten Strömungsweg wird Wärme übertragen.

Für das erfindungsgemäße Verfahren gelten alle für die vorstehend diskutierten, erfindungsgemäßen Röhrenwärmeüberträger, Doppelumlenkbogen, Adapter und System aufgeführten Vorteile in analoger Weise.

Dabei können der erste Lebensmittelstrom und der zweite Lebensmittelstrom unterschiedliche Lebensmittel enthalten. Entsprechend können das erste und zweite Lebensmittel zwei unterschiedliche Lebensmittel sein. Es können aber auch dieselben Lebensmittel, insbesondere aus unterschiedlichen Ver- oder Bearbeitungsstufen, sein.

Zudem wird der erste Lebensmittelstrom beim Einströmen in den ersten Strömungsweg des Doppelumlenkbogens, insbesondere mittels eines Endabschnitts des Röhrenwärmeüberträgers oder eines Adapters, zu einem Strom zusammengefasst.

Hierdurch wird die Strömungsführung im Doppelumlenkbogen vereinfacht. Zudem wird die Konstruktion des Doppelumlenkbogens im Hinblick auf den ersten Strömungsweg erheblich vereinfacht. Die Ausgestaltung des ersten Strömungswegs als Gesamtstrom führt zudem zu einer Gewichtsverminderung und Materialersparnis des Doppelumlenkbogens. Die Vorteile einer Vermischung und der daraus resultierenden homogenen Temperaturverteilung sind vorstehend bereits diskutiert worden.

Zusätzlich oder alternativ zum Zusammenfassen des ersten Lebensmittelstroms beim Einströmen in den ersten Strömungsweg zu einem Strom wird der erste Lebensmittelstrom beim Ausströmen aus dem ersten Strömungsweg des Doppelumlenkbogens, insbesondere mittels des Endabschnitts des Röhrenwärmeüberträgers oder des Adapters, in wenigstens einen Teilstrom aufgeteilt.

Mit der Aufteilung in Teilströme und Zuführung dieser Teilströme zum wenigstens einen Wärmeübertragungsrohr des in Fluidverbindung stehenden Röhrenwärmeüberträgers wird die Möglichkeit der Nutzung der vergrößerten Wärmeübertragungsfläche des Röhrenwärmeüberträgers eröffnet.

Vorteilhafte Weiterbildungen des erfindungsgemäßen Verfahrens sind Gegenstand des abhängigen Anspruchs 13.

Besonders vorteilhaft ist es dabei, wenn die Wärme ohne Verwendung eines Wärmespeichers oder Wärmeträgers übertragen wird.

Hierdurch kann auf eine weitere Wärmeübertragungsvorrichtung sowie weitere Zusatzausstattung, wie beispielsweise Tanks, Rohrleitungen und Pumpen, verzichtet werden. Somit wird der apparative Aufwand klein gehalten und Zusatzkosten vermieden. Zudem sind Energieverluste, beispielsweise durch Wärmeabstrahlung und Strömungswiderstände, konstruktionsbedingt auf ein Minimum reduziert.

Ferner ist es vorteilhaft, wenn der erste Strömungsweg und/oder der zweite Strömungsweg gegenüber dem wenigstens einen Wärmeübertragungsrohr verschiebbar sind/ist, wie vorstehend diskutiert.

Die Erfindung wird nachfolgend in Ausführungsbeispielen anhand der Figuren der Zeichnung näher erläutert. Es zeigt:
- Fig. 1: eine schematische, perspektivische Vorderansicht eines Endabschnitts eines Bündels von Wärmeübertragungsrohren des erfindungsgemäßen Röhrenwärmeüberträgers;
- Fig. 2: eine schematische, perspektivische Rückansicht des Endabschnitts aus Fig. 1;
- Fig. 3: eine schematische, perspektivische Schnittansicht einer beispielhaften ersten Ausführungsform eines erfindungsgemäßen Doppelumlenkbogens, der zwei ausschnittsweise dargestellte, erfindungsgemäße Röhrenwärmeüberträger einer ersten Ausführungsform verbindet;
- Fig. 4: eine schematische, abgestufte Schnittansicht des erfindungsgemäßen Doppelumlenkbogens aus Fig. 3 von oben;
- Fig. 5: eine seitliche Schnittansicht einer beispielhaften zweiten Ausführungsform des erfindungsgemäßen Doppelumlenkbogens;
- Fig. 6: eine Vorderansicht des erfindungsgemäßen Doppelumlenkbogens aus Fig. 5;
- Fig. 7: eine schematische, perspektivische Teilschnittansicht des Flanschs des erfindungsgemäßen Doppelumlenkbogens aus Fig. 5;
- Fig. 8: eine schematische, perspektivische Vorderansicht des erfindungsgemäßen Adapters;
- Fig. 9: eine schematische, perspektivische Rückansicht des erfindungsgemäßen Adapters aus Fig. 8; und
- Fig. 10: eine schematische seitliche Schnittansicht des erfindungsgemäßen Adapters aus Fig. 8;

Im Sinne der Erfindung wird unter einem Endabschnitt 1 eines Röhrenwärmeüberträgers 2 ein stirnseitiges Ende des Röhrenwärmeüberträgers 2 verstanden. Ein Bereich, in dem ein Strom nicht durch das stirnseitige Ende des Röhrenwärmeüberträgers 2 aus dem Mantelraum 4 abgeführt wird und der vom stirnseitigen Ende des Röhrenwärmeüberträgers 2 beabstandet ist, wird als nicht zum Endabschnitt 1 gehörend im Sinne der Erfindung betrachtet. Erfindungsgemäß werden somit die Lebensmittelströme ohne vorherige Abzweigung bis zum stirnseitigen Ende parallel geführt.

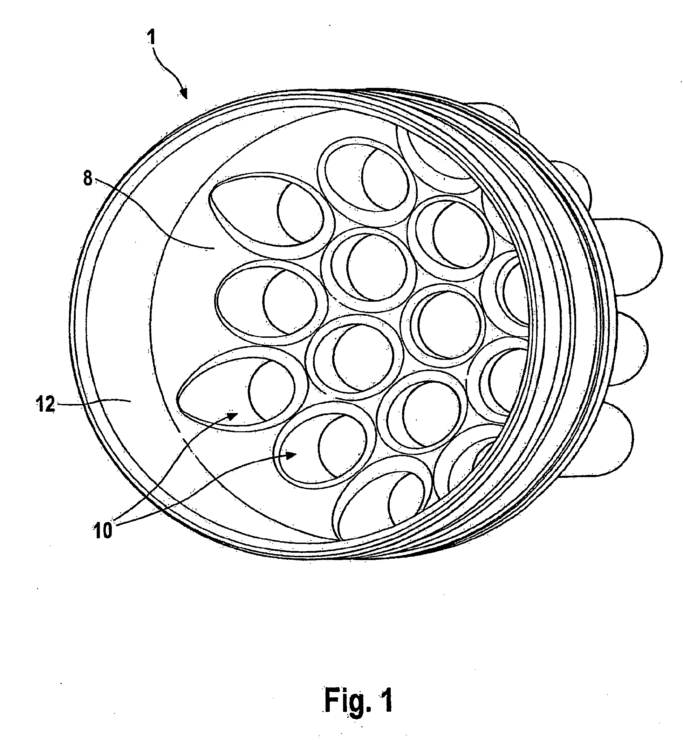

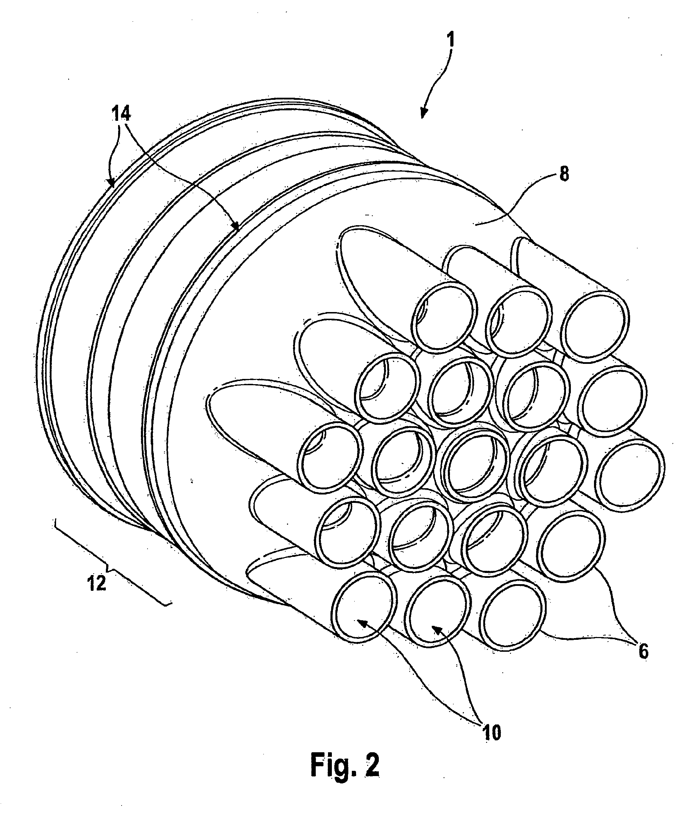

In den Figuren 1 und 2 ist eine beispielhafte erste Ausführungsform des Endabschnitts 1 des Bündels von 19 Wärmeübertragungsrohren 6 des erfindungsgemäßen Röhrenwärmeüberträgers 2 dargestellt.

Der Endabschnitt 1 weist einen Teilabschnitt 8 mit im Wesentlichen halbkugelförmiger Struktur auf. Der Teilabschnitt 8 ist auf ihrer äußeren Umfangsfläche mit den Wärmeübertragungsrohren 6 des Röhrenwärmeüberträgers 2 einstückig verbunden. Dabei ist die Mittelachse der Halbkugel parallel zu der Mittelachse des Röhrenwärmeüberträgers 2 bzw. der Wärmeübertragungsrohre 6 ausgerichtet. Der Endabschnitt 1 weist 19 Durchgangsöffnungen 10 auf, die in Anzahl und Anordnung den 19 Wärmeübertragungsrohren 6 entsprechen und mit diesen in Fluidverbindung stehen. Die Durchgangsöffnungen 10 weisen einen im Wesentlichen kreisrunden Querschnitt auf.

Auf der Innenseite des im Wesentlichen halbkugelförmigen Teilabschnitts 8 des Endabschnitts 1 des Röhrenwärmeüberträgers 2 sind die Einströmbereiche einer jeden Durchgangsöffnung 10 abgerundet ausgestaltet.

Der Endabschnitt 1 weist ferner einen im Wesentlichen hohlzylinderförmigen Teilabschnitt 12 auf, der mit dem halbkugelförmigen Teilabschnitt 8 des Endabschnitts 1 einstückig verbunden ist. Auf der äußeren Umfangsfläche weist der Teilabschnitt 12 zwei Nuten 14 auf, die jeweils mit einer O-Ring-Dichtung oder dergleichen bestückbar sind. Die beiden Nuten 14 sind im Wesentlichen an den äußeren Randbereichen des Teilabschnitts 12 angeordnet.

Der Endabschnitt 1 weist ferner eine weitere Durchgangsöffnung 15 auf, die von der äußeren Umfangsfläche der Teilabschnitte 8 und 12 und einer Innenwand eines nachfolgend beschriebenen Doppelumlenkbogens 16 nach dessen Montage an den Röhrenwärmeüberträger 2 begrenzt wird. Die Durchgangsöffnung 15 steht mit der Mantelraum 4 des Röhrenwärmeüberträgers 2 in Fluidverbindung.

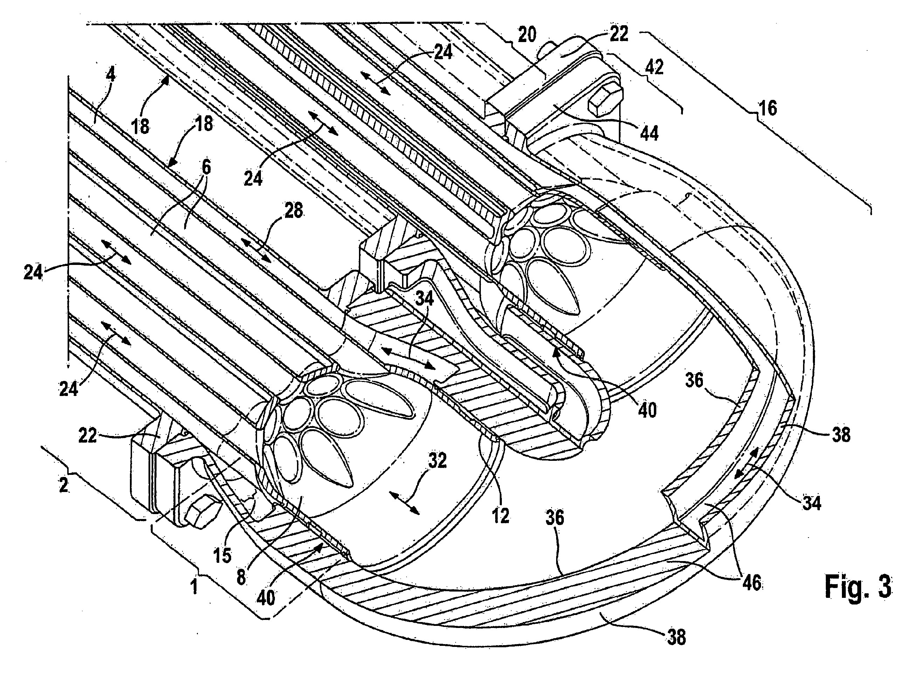

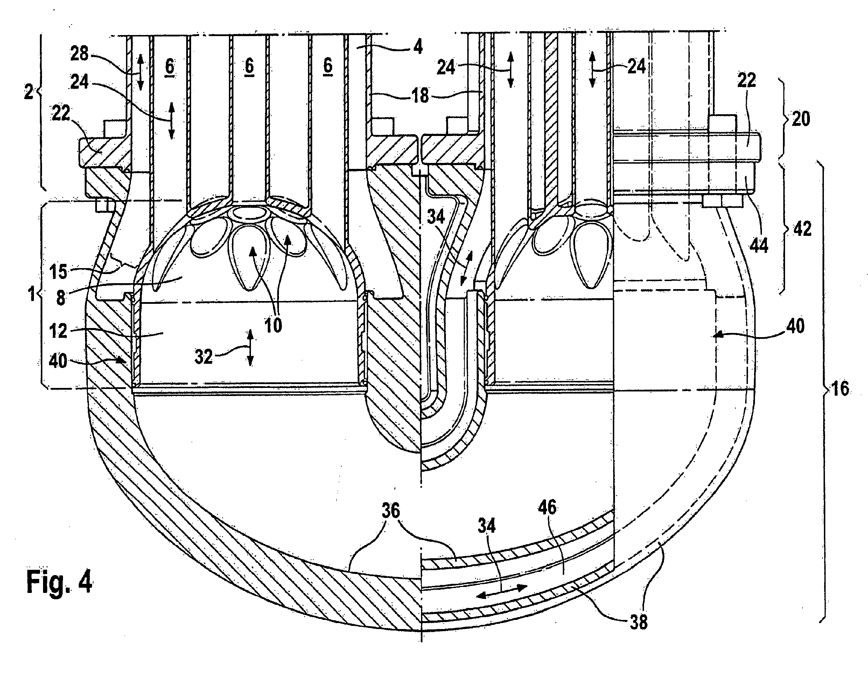

Die in den Figuren 3 und 4 beispielhaft dargestellte erste Ausführungsform des erfindungsgemäßen Doppelumlenkbogens 16 ist im montierten Zustand dargestellt. Dabei ist der Doppelumlenkbogen 16 mit zwei Röhrenwärmeüberträgern 2 verbunden.

Der Röhrenwärmeüberträger 2 weist ein Bündel von Wärmeübertragungsrohren 6 mit im wesentlichen kreisrunden Querschnitt auf, die an ihrem Ende zu den vorstehend beschriebenen Teilabschnitten 8 und 12 des Endabschnitts 1 zusammengefasst sind. Das Rohrbündel weist 19 Wärmeübertragungsrohre 6 und ist von einem Mantelrohr 18 umgeben, wobei zwischen dem Mantelrohr 18 und den Wärmeübertragungsrohren 6 der Mantelraum 4 ausgebildet ist. Das Mantelrohr 18 des Röhrenwärmeüberträgers 2 weist im Wesentlichen einen kreisrunden Querschnitt auf. Ferner weist es an seinem Endabschnitt 20 einen Flansch 22 auf.

Für alle übrigen Bauteile des Röhrenwärmeüberträgers 2, wie beispielsweise die Flüssigkeits-Zuführ- und - abführvorrichtungen, können bekannte, handelsübliche Komponenten verwendet werden.

Das Innere der Wärmeübertragungsrohre 6 stellt einen ersten Strömungsweg 24 für einen ersten Lebensmittelstrom 26 dar. Ferner stellt der Mantelraum 4 einen zweiten Strömungsweg 28 für einen zweiten Lebensmittelstrom 30 dar.

Der erfindungsgemäßer Doppelumlenkbogen 16 weist einen ersten Strömungsweg 32 für den ersten Lebensmittelstrom 26 und einen zweiten Strömungsweg 34 für den zweiten Lebensmittelstrom 30 auf. Der erste Strömungsweg 32 wird von einem inneren Rohrbogen 36 begrenzt. Der zweite Strömungsweg 34 verläuft in einem Raum zwischen dem inneren Rohrbogen 36 und einem äußeren Rohrbogen 38. Der innere Rohrbogen 36 ist somit im Innenraum des äußeren Rohrbogens 38 angeordnet. Der äußere Rohrbogen 38 grenzt den Doppelumlenkbogen 16 zur Umgebung ab.

Der innere Rohrbogen 36 und der äußere Rohrbogen 38 weisen im Wesentlichen die Gestalt eines halben Torus auf, wobei deren Durchmesser im mittleren Bogenabschnitt verringert ist. Der innere Rohrbogen 36 weist zwei im Wesentlichen hohlzylinderförmige Endabschnitte 40 auf, die einen im Wesentlichen kreisrunden Querschnitt mit einem geringfügig größeren Durchmesser als der Teilabschnitt 12 des Endabschnitts 1 aufweisen. Der äußere Rohrbogen 38 weist zwei Endabschnitte 42 auf, die einen im Wesentlichen kreisrunden Querschnitt mit einem größeren Durchmesser als der des Teilabschnitts 12 aufweisen. Ferner weisen die Endabschnitte 42 Flansche 44 auf.

Der innere Rohrbogen 36 und der äußere Rohrogen 38 dieser Ausführungsform sind mittels vier Abstandhaltern 46 voneinander beabstandet angeordnet. Die Abstandhalter 46 sind mit der äußeren Umfangsfläche des inneren Rohrbogens 36 einstückig verbunden und folgen der Kontur des inneren Rohrbogens 36 von dem einen Endabschnitt 40 zum anderen. In der dargestellten Ausführungsform sind die vier Abstandhalter 46 auf der äußeren Umfangsfläche des inneren Rohrbogens 36 im Wesentlichen im rechten Winkel zueinander versetzt angeordnet. Die Abstandhalter 46 sind ferner mit der Innenfläche des äußeren Bogens 38 einstückig verbunden. Dabei weist der Abstandhalter 46 im Wesentlichen die Gestalt eines parallelen Doppelstreifens auf, dessen Enden an den Endabschnitten 40 unter Ausbildung einer Rundung zusammengefügt sind.

Die im Wesentlichen punktuellen Berührungsstellen zwischen den Abstandhaltern 46 und dem inneren Rohrbogen 36 und dem äußeren Rohrbogen 38 sorgen für eine minimale Anlagerung von möglicherweise im zweiten Lebensmittelstrom 30 enthaltenen Feststoffen.

Bei der Montage des Doppelumlenkbogens 16 werden die Endabschnitte 42 des äußeren Rohrbogens 38 über den Teilabschnitt 12 des Endabschnitts 1 des Bündels von Wärmeübertragungsrohren 6 geführt, bis die Flansche 44 des äußeren Rohrbogens 38 mit den Flanschen 22 des Mantelrohrs 18 in Berührung sind. Die Flansche 44 können mit den Flanschen 22 mittels Befestigungsmitteln, wie Schrauben oder dergleichen, verbunden werden. Dabei werden die Endabschnitte 40 des inneren Rohrbogens 36 auf die Teilabschnitte 12 der Endabschnitte 1 der Wärmeübertragungsrohre 6 der beiden Röhrenwärmeüberträger 2 aufgeschoben.

Im montierten Zustand sind die Endabschnitte 40 des inneren Rohrbogens 36 zum jeweiligen Endabschnitt 1 des Röhrenwärmeüberträgers 2 verschiebbar zueinander gelagert und mittels der beiden in den Nuten 14 angeordneten O-Ring-Dichtungen gegeneinander abgedichtet.

So steht im montierten Zustand der erste Strömungsweg 24 im Innern der Wärmeübertragungsrohre 6 über die Durchgangsöffnungen 10 des Endabschnitts 1 mit dem ersten Strömungsweg 32 im Inneren des inneren Rohrbogens 36 in Fluidverbindung. Ferner steht der zweite Strömungsweg 28 im Mantelraum 4 des Röhrenwärmeüberträgers 2 über die Durchgangsöffnung 15 des Endabschnitts 1 mit dem zweiten Strömungsweg 34 zwischen dem innere Rohrbogen 36 und dem äußeren Rohrbogen 38 des Doppelumlenkbogens 16 im Fluidverbindung. Der innere Rohrbogen 36 ist somit vollständig vom zweiten Strömungsweg 34 umgeben. Der zweite Strömungsweg 34 weist somit hinsichtlich dem ersten Strömungsweg 32 des Doppelumlenkbogens 16 die Ge-stalt einer Mantelströmung auf.

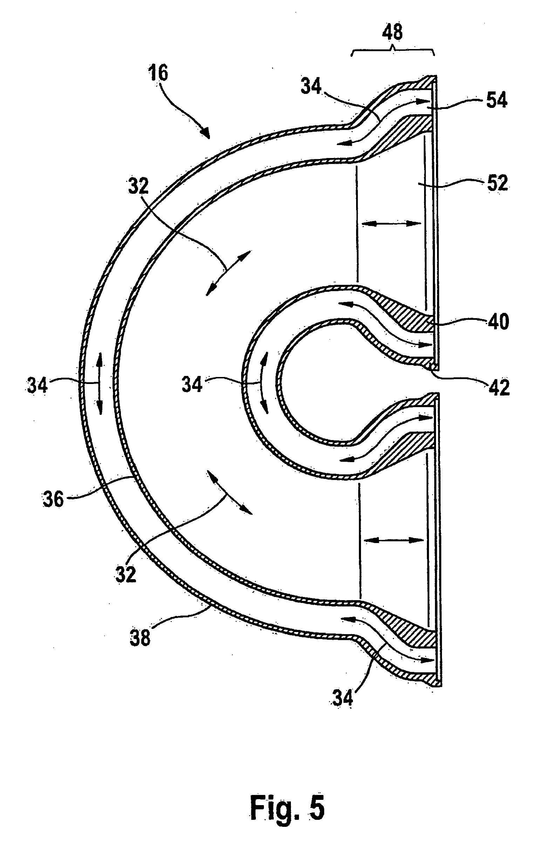

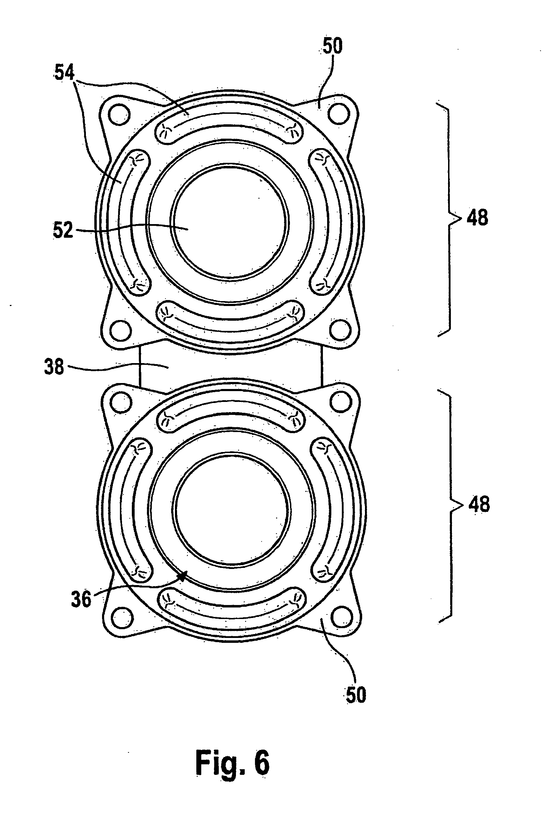

In den Figuren 5 bis 7 ist eine zweite beispielhafte Ausführungsform des Doppelumlenkbogens 16 dargestellt. Der Doppelumlenkbogen 16 dieser Ausführungsform weist zwei Rohrbögen 36 und 38 auf. Die Rohrbögen 36 und 38 weisen im Wesentlichen die Gestalt eines halben Torus mit unterschiedlichen Durchmessern auf. Dabei ist der innere Rohrbogen 36 mit geringerem Durchmesser im Innern des äußeren Rohrbogens 38 mit größerem Durchmesser angeordnet. Die Endabschnitte 48 des Doppelumlenkbogens 16 sind als zwei baugleiche Flansche 50 ausgestaltet. In jedem Endabschnitt 48 sind der Endabschnitt 40 des inneren Rohrbogens 36 und der Endabschnitt 42 des äußeren Rohrbogens 38 angeordnet. Dabei ist der Durchmesser des Endabschnitts 40 gegenüber dem des inneren Rohrbogens 36 vergrößert. Ebenso ist der Durchmesser des Endabschnitts 42 gegenüber dem des äußeren Rohrbogens 38 vergrößert. Der Flansch 50 dient der Befestigung an einen Röhrenwärmeüberträger 2 und/oder einem nachstehend beschriebenen Adapter.

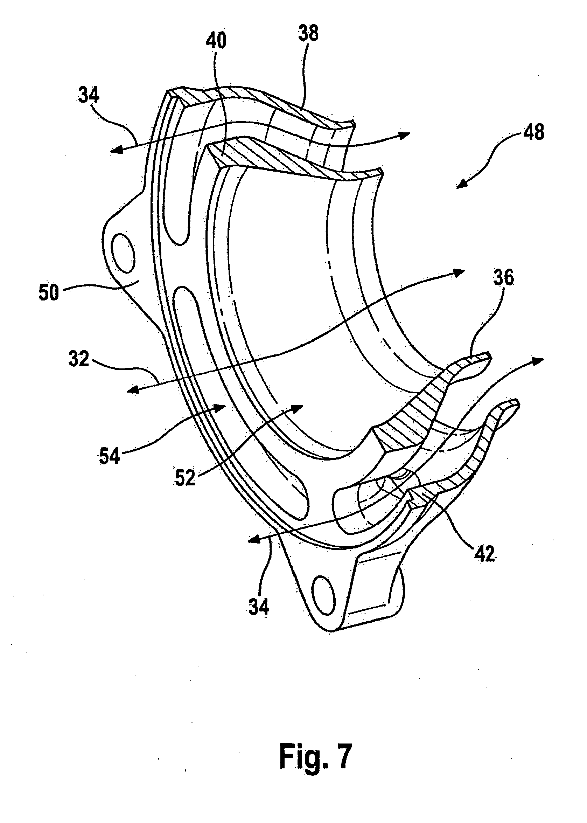

Der Endabschnitt 48 weist eine erste Durchgangsöffnung 52 mit im Wesentlichen kreisrundem Querschnitt auf, die mit dem ersten Strömungsweg 32 im Inneren des inneren Rohrbogens 36 in Fluidverbindung steht. Ferner weist der Endabschnitt 48 vier zweite Durchgangsöffnungen 54 von kreisringsegmentförmiger Gestalt auf, die mit dem zweiten Strömungsweg 34 in Fluidverbindung stehen. Die Strömungswege 32 und 34 durch den Endabschnitt 48 sind insbesondere in Fig. 7 zu erkennen.

Der innere Rohrbogen 34 und der äußere Rohrbogen 38 werden durch die Endabschnitte 48 gehalten und in ihrer räumlichen Anordnung zueinander festgelegt.

Im montierten Zustand steht der erste Strömungsweg 24 im Innern der Wärmeübertragungsrohre 6 mit dem ersten Strömungsweg 32 im Innern des inneren Rohrbogens 36 in Fluidverbindung. Ferner steht der erste Strömungsweg 24 eines weiteren Röhrenwärmeüberträgers 2 mit dem ersten Strömungsweg 32 in Fluidverbindung. Des Weiteren steht der zweite Strömungsweg 28 im Mantelraum 4 des Röhrenwärmeüberträgers 2 mit dem zweiten Strömungsweg 34 zwischen dem inneren Rohrbogen 36 und dem äußeren Rohrbogen 38 des Doppelumlenkbogens 16 in Fluidverbindung. Der zweite Strömungsweg 34 steht ferner mit dem zweiten Strömungsweg 28 des zweiten Röhrenwärmeüberträgers 2 in Fluidverbindung.

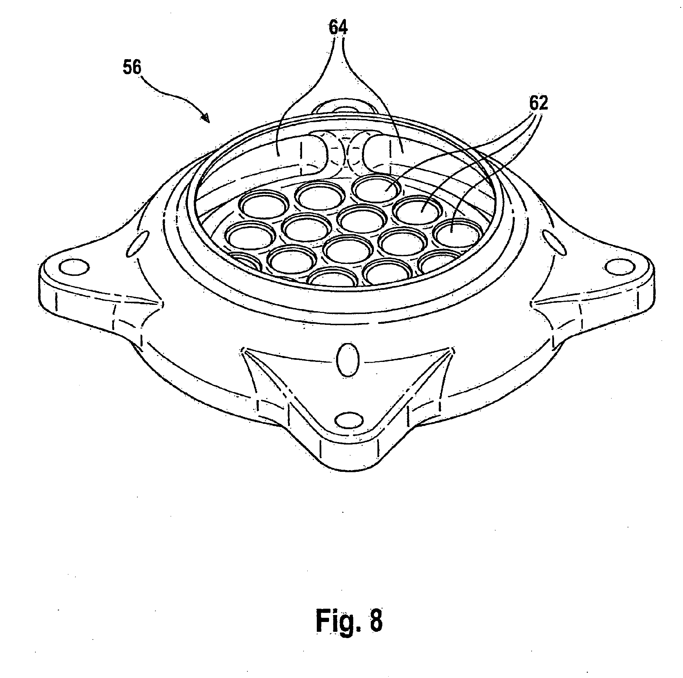

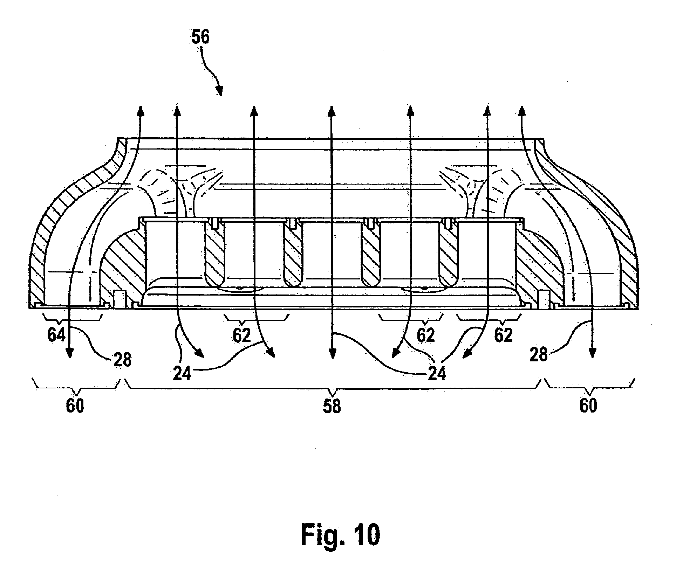

Ein in den Figuren 8 bis 10 dargestellter, erfindungsgemäßer Adapter 56 ist als ein Flansch ausgebildet und weist einen ersten Abschnitt 58 sowie einen zweiten Abschnitt 60 auf. Der erste Abschnitt 58 weist im Wesentlichen die Struktur einer kreisförmigen Platte mit 19 Durchgangsöffnungen 62 auf. Die Durchgangsöffnungen 62 des ersten Abschnitts 58 entsprechen in Querschnittsgestalt, Durchmesser und Anordnung im Wesentlichen den Wärmeübertragungsrohren 6 des Röhrenwärmeüberträgers 2. Die Durchgangsöffnungen 62 weisen einen im wesentlichen kreisrunden Querschnitt auf. Die Einströmbereiche der Durchgangsöffnungen 62 sind abgerundet ausgebildet, wie es insbesondere der Fig. 10 zu entnehmen ist.

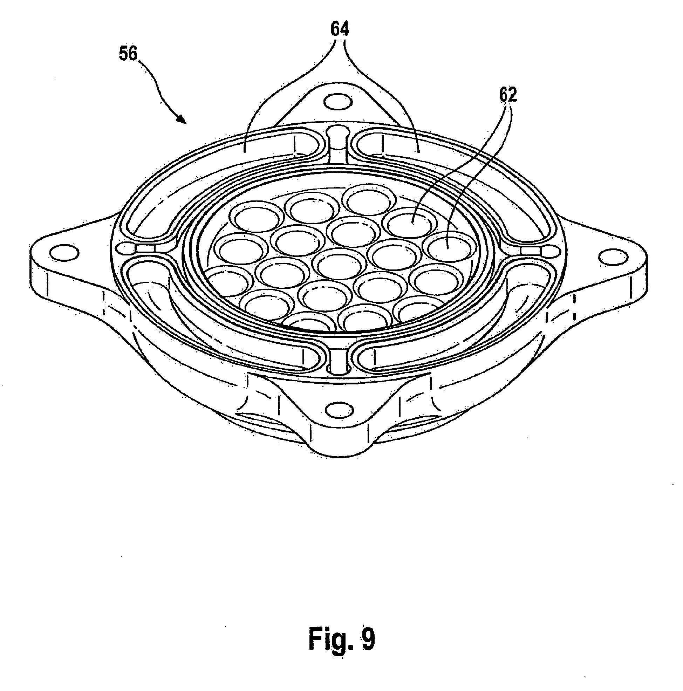

Der zweite Abschnitt 60 weist im Wesentlichen eine kreisringförmige Struktur mit vier Durchgangsöffnungen 64 mit im Wesentlichen kreisringsegmentartiger Gestalt auf, wie es insbesondere aus der Rückansicht der Fig. 9 zu erkennen ist. Der zweite Abschnitt 60 entspricht in Durchmesser und Anordnung dem Endabschnitt 20 des Mantelrohrs 18 des Röhrenwärmeüberträgers 2. Wie insbesondere aus Fig. 10 erkennbar, reichen die Durchgangsöffnungen 62 und die Durchgangsöffnungen 64 von der Vorderseite des Adapters 56 bis zu dessen Rückseite. Die Durchgangsöffnungen 62 und die Durchgangsöffnungen 64 stellen getrennte Strömungswege dar, die nicht in Fluidverbindung sind.

Der Adapter 56 ist als Alternative zum vorstehend beschriebenen Endabschnitt 1 und Flansch 22 des Röhrenwärmeüberträgers 2 vorgesehen. Daher steht im montierten Zustand die in Fig. 8 dargestellte Vorderseite des Adapters 56 mit dem Röhrenwärmeüberträger 2 in Verbindung. Genauer gesagt, sind die Wärmeübertragungsrohre 6 mit dem ersten Abschnitt 58 derart verbunden, dass deren jeweiliger Innenraum mit der entsprechenden Durchgangsöffnung 62 des Adapters 56 in Fluidverbindung ist. Im montierten Zustand des Adapters 56 bilden die Durchgangsöffnungen 62 damit einen Teil des vorstehend diskutierten, ersten Strömungswegs 24 des Röhrenwärmeüberträgers 2 aus.

Ferner ist das Mantelrohr 18 des Röhrenwärmeüberträgers 2 im montierten Zustand des Adapters 56 mit dessen zweiten Abschnitt 60 derart verbunden, dass der Mantelraum 4 des Röhrenwärmeüberträgers 2 mit den Durchgangsöffnungen 64 in Fluidverbindung ist. Damit bilden die Durchgangsöffnungen 64 einen Teil des vorstehend diskutierten, zweiten Strömungswegs 28 des Röhrenwärmeüberträgers 2 aus.

Zur erfindungsgemäßen Verwendung wird der Endabschnitt 48 der vorstehend beschriebenen, zweiten Ausführungsform des Doppelumlenkbogens 16 mit der in Fig. 9 dargestellten Rückseite des am Röhrenwärmeüberträger 2 montierten Adapters 56 in Verbindung gebracht. Der Endabschnitt 48 kann mit dem Adapter 56 mittels Befestigungsmitteln, wie beispielsweise Schrauben und dergleichen, verbunden werden. Hierdurch wird der erste Strömungsweg 24 des Röhrenwärmeüberträgers 2 über die Durchgangsöffnungen 62 des Adapters 56 mit dem ersten Strömungsweg 32 des Doppelumlenkbogens 16 in Fluidverbindung gebracht. Daneben wird der zweite Strömungsweg 28 des Röhrenwärmeüberträgers 2 über die Durchgangsöffnungen 64 des Adapters 56 mit dem zweiten Strömungsweg 34 des Doppelumlenkbogens 16 in Fluidverbindung gebracht.

Nach Montage eines zweiten Röhrenwärmeüberträgers 2 an den zweiten Endabschnitt 48 des Doppelumlenkbogens 16 in derselben Weise steht letztlich der erste Strömungsweg 24 des Röhrenwärmeüberträgers 2 über den ersten Strömungsweg 32 des Doppelumlenkbogens 16 mit dem ersten Strömungsweg 24 des zweiten Röhrenwärmeüberträgers 2 in Fluidverbindung. Die Strömungswege 24 und 32 bilden gemeinsam den Strömungsweg für den ersten Lebensmittelstrom 26 aus. Analog steht der zweite Strömungsweg 28 des Röhrenwärmeüberträgers 2 über den zweiten Strömungsweg 34 des Doppelumlenkbogens 16 mit dem zweiten Strömungsweg 28 des weiteren Röhrenwärmeüberträgers 2 in Fluidverbindung. Die Strömungswege 28 und 34 bilden gemeinsam den Strömungsweg für den zweiten Lebensmittelstrom 30 aus. Die Strömungswege des ersten Lebensmittelstroms 26 und des zweiten Lebensmittelstroms 30 sind an keiner Stelle in Fluidverbindung.

Durch das vorstehend beschriebene in Verbindung bringen wenigstens eines Doppelumlenkbogens 16 mit wenigstens einem Röhrenwärmeüberträger 2 wird ein erfindungsgemäßes Röhrenwärmeüberträgersystem 66 geschaffen.

In einem ersten beispielhaften Verfahren zur Wärmeübertragung zwischen wenigstens zwei Lebensmittelströmen wird das vorstehend beschriebene Röhrenwärmeüberträgersystem 66 mit wenigstens zwei Röhrenwärmeüberträgern 2 und wenigstens einem Doppelumlenkbogen 16 eingesetzt. Beim Wärmeübertragungsvorgang strömt ein erstes Lebensmittel im Inneren der Wärmeübertragungsrohre 6 des Röhrenwärmeüberträgers 2. Erreicht dieser erste Lebensmittelstrom 26 den Doppelumlenkbogen 16, werden seine auf die einzelnen Wärmeübertragungsrohre 6 aufgeteilten Teilströme im Endabschnitt 1 zu einem Gesamtstrom zusammengeführt, der vom Endabschnitt 1 unmittelbar in den ersten Strömungsweg 32 des Doppelumlenkbogens 16 im Innern des inneren Bogens 36 einströmt. Beim Durchströmen des ersten Strömungswegs 32 erfährt der erste Lebensmittelstrom 26 eine Umlenkung der Strömungsrichtung um etwa 180° und gelangt in den Endabschnitt 1 des Rohrbündels eines zweiten Röhrenwärmeüberträgers 2. Hier trifft der erste Lebensmittelstrom 26 auf das halbkugelförmige Anströmprofil des Endabschnitts 1, wo er auf die Mehrzahl der Wärmeübertragungsrohre 6 des zweiten Röhrenwärmeüberträgers 2 verteilt wird. Diese Aufteilung des ersten Lebensmittelstroms 26 in Teilströme erfolgt strömungstechnisch optimiert mittels der abgerundeten Einströmbereiche, die am Endabschnitt 1 ausgebildet sind. Zudem trifft der erste Lebensmittelstrom 26 aufgrund der Gestalt des im Wesentlichen halbkugelförmigen Teilabschnitts 8 des Endabschnitts 1 an praktisch keiner Stelle senkrecht auf die Anströmfläche des Endabschnitts 1 auf. Insbesondere in den äußeren Randbereichen des Teilabschnitts 8 des Endabschnitts 12 erfolgt die Anströmung in im Wesentlichen tangentialer Richtung zur Oberfläche, wodurch der Strömungswiderstand erheblich minimiert ist. Nach der Aufteilung des Gesamtstroms des ersten Lebensmittelstroms 26 in Teilströme, strömen diese ins Innere des zweiten Röhrenwärmeüberträgers 2 weiter.

Der im Mantelraum 4 des Röhrenwärmeüberträgers 2 strömende zweite Lebensmittelstrom 30 überträgt Wärme durch die Wände der Wärmeübertragungsrohre 6 auf den ersten Lebensmittelstrom 26. Die Wärmeübertragung kann jedoch auch in umgekehrter Richtung erfolgen. Die Strömungsrichtung des ersten Lebensmittelstroms 26 und des zweiten Lebensmittelstroms 30 kann gleich oder entgegengesetzt sein. Nach Erreichen des Endabschnitts 20 des Mantelrohrs 18, strömt der zweite Lebensmittelstrom 30 durch die Durchgangsöffnung 15 in den zweiten Strömungsweg 28 im Innern des äußeren Rohrbogens 38 des Doppelumlenkbogens 16 ein. Dabei umströmt der zweite Lebensmittelstrom 30 den inneren Rohrbogen 36 im Wesentlichen vollständig. Im Doppelumlenkbogen 16 setzt sich die Wärmeübertragung von einem Lebensmittelstrom zum anderen durch die Wand des inneren Rohrbogens 36 fort. Am anderen Endabschnitt 42 des äußeren Rohrbogens 38 angekommen, verlässt der zweite Lebensmittelstrom 30 den äußeren Rohrbogen 38 und wird in den Mantelraum 4 des zweiten Röhrenwärmeüberträgers 2 überführt, wo sich die Wärmeübertragung wie vorstehend beschrieben fortsetzt. Somit erfolgt die Wärmeübertragung zwischen dem ersten Lebensmittelstrom 26 und dem zweiten Lebensmittelstrom 30 über den gesamten Strömungsweg durch den ersten Röhrenwärmeüberträger 2, den Doppelumlenkbogen 16 und den zweiten Röhrenwärmeüberträger 2. Innerhalb des Doppelumlenkbogens 16 stellt der zweite Lebensmittelstrom 30 gegenüber dem ersten Lebensmittelstrom 26 eine Mantelströmung dar.

In einem zweiten beispielhaften Verfahren wird ein Röhrenwärmeübertragungssystem 66 mit wenigstens einem Röhrenwärmeüberträger 2 und wenigstens einem Doppelumlenkbogen 16 der zweiten, vorstehend beschriebenen Ausführungsform verwirklicht. Hierbei weisen die Röhrenwärmeüberträgern 2 keine vorstehend beschriebenen Endabschnitte 1 und Flansche 22 auf. Stattdessen ist wenigstens eine Stirnseite der Röhrenwärmeüberträgers 2 mit einem der vorstehend beschriebenen Adapter 56 verbunden, an den wiederum der Doppelumlenkbogen 16 montiert ist. Dabei erfolgt die Strömungsführung der Lebensmittelströme im wesentlichen analog zur Strömungsführung des vorstehend beschriebenen, ersten beispielhaften Verfahrens. Allerdings durchströmt der erste Lebensmittelstrom 26 nicht die Durchgangsöffnungen 10 des Endabschnitts 1 des Röhrenwärmeüberträgers 2, sondern die Durchgangsöffnungen 62 des Adapters 56. Zudem durchströmt der zweite Lebensmittelstrom 30 nicht die Durchgangsöffnung 15 des Endabschnitts 1, sondern die Durchgangsöffnungen 64 des Adapters 56.

Im Röhrenwärmeüberträger 2 und/oder Doppelumlenkbogen 16 und/oder Röhrenwärmeüberträgersystem 66 können Flüssigkeiten und insbesondere flüssige Lebensmittel oder entsprechende Vorstufen eingesetzt werden. Insbesondere sind die vorstehend aufgeführten, erfindungsgemäßen Vorrichtungen zur Wärmeübertragung zwischen Flüssigkeiten wie Wasser, Bier, Gemüsesaft, Fruchtsaft, Limonade, Nektar, Honig, Milch, Sirup, Flüssigkeiten auf Teebasis, Grundstoff, Konzentrate und beliebige Mischungen dieser Flüssigkeiten, oder dergleichen vorgesehen. Dabei können die vorstehend genannten Flüssigkeiten auch Feststoffe, wie beispielsweise Pulpen, Fruchtmark, Fasern, Ballaststoffe, Eiweiß oder dergleichen enthalten.

Die Volumenströme des ersten Lebensmittelstroms 26 und/oder des zweiten Lebensmittelstroms 30 betragen typischerweise 5 bis 90 m³/h, vorzugsweise 7,5 bis 60 m³/h und insbesondere 15 bis 45 m³/h. Die Druckverluste der Flüssigkeiten innerhalb des Röhrenwärmeüberträgers 2 betragen üblicherweise 0,1 bis 1 bar. Der Druckverlust des ersten Lebensmittelstroms 26 innerhalb des ersten Strömungswegs 32 des Doppelumlenkbogens 16 beträgt üblicherweise 0,1 bis 0,2 bar. Der Druckverlust des zweiten Lebensmittelstroms 30 innerhalb des zweiten Strömungswegs 34 des Doppelumlenkbogens 16 beträgt üblicherweise 0,1 bis 0,2 bar. Die Temperatur der flüssigen Lebensmittel liegt typischerweise im Bereich von 0 bis 150 °C. Die Temperaturgradienten der Wärmeübertragung liegen typischerweise im Bereich von 2 bis 15 °C.

Der Innendurchmesser des Wärmeübertragungsrohrs 6 ist im Bereich von 10 bis 100 mm. Die Anzahl der Wärmeübertragungsrohre 6 kann je nach Baugröße 1 bis 100 betragen. Der Abstand zwischen benachbart angeordneten Wärmeübertragungsrohren 6 ist im Bereich von 1 bis 15 mm. Ferner ist der Abstand zwischen den Wärmeübertragungsrohren 6 und dem Mantelrohr 18 im Bereich von 1 bis 15 mm. Die Länge eines Wärmeübertragungsrohrs 6 ist im Bereich von 2.000 bis 6.000 mm. Die Wandstärke des Wärmeübertragungsrohrs 6 ist im Bereich von 1 bis 6 mm.

Der Innendurchmesser des Mantelrohrs 18 ist im Bereich von 40 bis 200 mm. Die Länge des Mantelrohrs 18 ist im Bereich von 2.000 bis 6.000 mm. Die Wandstärke des Mantelrohrs 18 ist im Bereich von 1 bis 6 mm.

Der Innendurchmesser des inneren Rohrbogens 36 des Doppelumlenkbogens 16 ist im Bereich von 25 bis 150 mm. Der Innendurchmesser des äußeren Rohrbogens 38 ist im Bereich von 40 bis 200 mm. Der Abstand zwischen dem inneren Rohrbogen 36 und dem äußeren Rohrbogen 38 ist im Bereich von 7 bis 40 mm. Die Wandstärke des inneren Rohrbogens 36 ist im Bereich von 1 bis 6 mm. Die Wandstärke des äußeren Rohrbogens 38 ist im Bereich von 1 bis 6 mm. Ferner ist der Abstand zwischen den beiden Mittelachsen der Endabschnitte 40 bzw. 48 im Bereich von 80 bis 400 mm.

Der Innendurchmesser des Teilabschnitts 8 und/oder des Teilabschnitts 12 des Endabschnitts 1 ist im Bereich von 40 bis 200 mm. Der Außendurchmesser des Teilabschnitts 8 und/oder des Teilabschnitts 12 des Endabschnitts 1 ist im Bereich von 40 bis 200 mm. Die Zylinderlänge des Teilabschnitts 8 ist im Bereich von 20 bis 100 mm.

Der Innendurchmesser des Endabschnitts 40 des Doppelumlenkbogens 16 ist im Bereich von 50 bis 250 mm. Der Innendurchmesser des Endabschnitts 42 des Doppelumlenkbogens 16 ist im Bereich von 40 bis 200 mm.

Der Durchmesser des kreisförmigen, ersten Abschnitts 58 des Adapters 56 ist im Bereich von 40 bis 200 mm. Der Innendurchmesser des kreisringförmigen, zweiten Abschnitts 60 des Adapters 56 ist im Bereich von 50 bis 220 mm. Der Außendurchmesser des kreisringförmigen, zweiten Abschnitts 60 des Adapters 56 ist im Bereich von 60 bis 400 mm. Die Länge des Adapters 56 ist im Bereich von 10 bis 100 mm.

Die Erfindung lässt neben den erläuterten Ausführungsbeispielen auch weitere Gestaltungsansätze zu.

Die Anzahl der Wärmeübertragungsrohre 6 ist nicht auf 19 beschränkt, sondern kann eine beliebige ganze Zahl zwischen eins und 100, vorzugsweise zwischen sieben und 50, insbesondere zwischen 12 und 37 sein. Zudem kann die Art der Anordnung der Wärmeübertragungsrohre 6 beliebig gewählt sein. Dementsprechend kann die Anzahl der Durchgangsöffnungen 10 des Endabschnitts 1 des Röhrenwärmeüberträgers 2 und/oder die Anzahl der Durchgangsöffnungen 62 des ersten Abschnitts 58 des Adapters 56 variiert werden.

Die Wärmeübertragungsrohre 6 können wenigstens teilweise auch einen Querschnitt von einer drei- oder mehreckigen, elliptischen, rautenförmigen, trapezförmigen oder einer anderweitigen Gestalt aufweisen. Dementsprechend können/kann die Durchgangsöffnungen 10 des Endabschnitts 1 des Röhrenwärmeüberträgers 2 und/oder die Durchgangsöffnungen 62 des ersten Abschnitts 58 des Adapters 56 wenigstens teilweise in ihrer Querschnittsgestalt variiert werden. Die Variation der Querschnittsgestalt muss nicht alle vorstehend genannten Vorrichtungsteile betreffen, sondern kann auch nur bei einem Teil derer verwirklicht sein.

Das Mantelrohr 18 des Röhrenwärmeüberträgers 2 und/oder dessen Endabschnitt 20 können/kann alternativ auch einen Querschnitt von einer drei- oder mehreckigen, elliptischen, rautenförmigen, trapezförmigen oder einer anderweitigen Gestalt aufweisen. Dementsprechend können/kann der Endabschnitt 42 des äußeren Rohrbogens 38 des Doppelumlenkbogens 16 und/oder der erste Abschnitt 58 des Adapters 56 in seiner/ihrer Querschnittsgestalt variiert werden.

Der Teilabschnitt 8 des Endabschnitts 1 kann neben einer halbkugelförmigen Gestalt auch eine becherförmige, teilrotationsellipsoide oder trichterförmige Gestalt oder dergleichen aufweisen.

Der Teilabschnitt 12 des Endabschnitts 1 kann neben einer runden Querschnittsgestalt auch eine drei- oder mehreckige, elliptische, rautenförmige, trapezförmige oder einer anderweitige Gestalt aufweisen.

Die Anzahl der Nuten 14 und der O-Ring-Dichtungen ist nicht auf zwei beschränkt, sondern kann zwischen eins und sechs und insbesondere zwischen zwei und vier liegen. Neben O-Ring-Dichtungen können auch beliebige andere Dichtungen oder andere geeignete Dichtungsarten eingesetzt werden.

Die Gestalt des inneren Rohrbogens 36 und/oder äußeren Rohrbogens 38 sind/ist nicht auf die Gestalt eines halben Torus beschränkt. Stattdessen ist auch eine gestauchte, gestreckte oder anders verformte Variante davon denkbar. Die Querschnittsgestalt des inneren Rohrbogens 36 und/oder des äußeren Rohrbogens 38 kann kreisrund, drei- oder mehreckig, elliptisch, rautenförmig, trapezförmig oder dergleichen sein. Denkbar ist auch, das der erfindungsgemäße Rohrbogen mehrere dieser Querschnittsformen abschnittsweise aufweist. Die Querschnittsgestalt des Endabschnitts 40 des inneren Rohrbogens 36 entspricht im Wesentlichen der des Teilabschnitts 12 des Endabschnitts 1. Daher kann der Querschnitt des Endabschnitts 40 auch eine drei- oder mehreckige, elliptische, rautenförmige, trapezförmige oder einer anderweitige Gestalt aufweisen. Der Querschnitt des Endabschnitts 42 des äußeren Rohrbogens 38 kann neben einer kreisrunden auch eine drei- oder mehreckige, elliptische, rautenförmige, trapezförmige oder eine anderweitige Gestalt aufweisen.

Die Anzahl der Abstandhalter 46 ist nicht auf vier beschränkt, sondern kann eins bis sechs und insbesondere zwei bis vier betragen. Es ist auch denkbar, das der Doppelumlenkbogen 16 keinen Abstandhalter aufweist. Der Abstandhalter 46 kann als Rippe, Finne oder Streifen ausgebildet sein. Er kann doppelt oder einfach ausgeführt sein. Des Weiteren kann auch jeder geeignete, herkömmliche Abstandhalter verwendet werden. Ferner muss der Abstandhalter 46 nicht im rechten Winkel zur äußeren Umfangsfläche des inneren Rohrbogens 36 und/oder des äußeren Rohrbogens 38 angeordnet sein. Er kann auch in einem beliebigen anderen Winkel angeordnet sein.

Die Berührungsstellen zwischen den Abstandhaltern 46 und dem inneren Rohrbogen 36 und dem äußeren Rohrbogen 38 sind nicht auf wenigstens eine im Wesentlichen punktuelle Gestalt beschränkt. Sie können auch im Wesentlichen linear oder flächig oder in einer sonstigen geeigneten Weise ausgestaltet sein.

Der Endabschnitt 48 ist nicht auf nur eine erste Durchgangsöffnung 52 beschränkt. Er kann auch eine Mehrzahl von ersten Durchgangsöffnungen 52, vorzugsweise eins bis zehn und insbesondere eins bis sechs, aufweisen. Darüber hinaus ist der Endabschnitt 48 nicht auf vier zweite Durchgangsöffnungen 54 beschränkt. Er kann auch eine andere Anzahl von zweiten Durchgangsöffnungen 54, vorzugsweise eins bis zwölf und insbesondere zwei bis sechs, aufweisen.

Der erste Strömungsweg 32 und/oder der innere Rohrbogen 36 müssen/muss nicht vollständig innerhalb des zweiten Strömungswegs 34 angeordnet sein. Denkbar ist auch, dass sie nur teilweise innerhalb des zweiten Strömungswegs 34 angeordnet sind.

Hinsichtlich einer nicht zur Erfindung gehörenden Ausführungsform des Doppelumlenkbogens 16 ist denkbar, das der Endabschnitt 48 nicht als Flansch 50 ausgebildet ist, sondern eine andere geeignete Gestalt aufweist, die eine Montage an den Röhrenwärmeüberträger 2 und/oder den Adapter 56 ermöglicht.

Der erste Abschnitt 58 des Adapters 56 muss erfindungsgemäß nicht als kreisförmige Platte ausgebildet sein. Er kann auch eine halbkugelförmige, becherförmige, teilrotationsellipsoide oder trichterförmige Gestalt oder dergleichen aufweisen.

Der zweite Abschnitt 60 des Adapters 56 ist nicht auf eine kreisringförmige Struktur beschränkt, sondern kann auch eine andere geeignete Gestalt aufweisen. Ferner sind die Durchgangsöffnungen 64 nicht auf eine kreisringsegmentartige Gestalt beschränkt, sondern können auch eine andere geeignete Gestalt, wie beispielsweise kreisrund, drei- oder mehreckig, elliptisch, rautenförmig oder trapezförmig, aufweisen.

Hinsichtlich eines nicht erfindungsgemäßen Verfahrens ist es auch denkbar, dass die Teilströme des ersten Lebensmittelstroms 26 beim Einströmen in den ersten Strömungsweg 32 nicht zu einem Gesamtstrom vereinigt werden, sondern in Teilströmen durch den Doppelumlenkbogen 16 geführt werden. Dabei kann die Anzahl der Teilströme gleich oder kleiner der Anzahl der Teilströme des ersten Strömungswegs 24 des Röhrenwärmeüberträgers 2 sein. In diesem Zusammenhang muss der Endabschnitt 1 oder der Abschnitt 58 des Adapters 56 nicht als Strömungssammler oder Strömungsteiler ausgestaltet sein, sondern das wenigstens eine Wärmeübertragungsrohr 6 kann analog zum Röhrenwärmeüberträger 2 im Inneren des Doppelumlenkbogens 16 weitergeführt werden.

Erfindungsgemäß ist ferner denkbar, dass der erste Lebensmittelstrom 26 und/oder der zweite Lebensmittelstrom im Doppelumlenkbogen 16 in einem von 180° verschiedenen Winkel umgelenkt werden. Dabei kann der Winkel im Bereich von 0 bis 360°, vorzugsweise 45 bis 315° und insbesondere 90 bis 270° sein.

Die Anzahl der Röhrenwärmeüberträger 2, mit denen einer der Doppelumlenkbogen 16 in Fluidverbindung bringbar ist, ist nicht auf zwei begrenzt. Sie kann eine beliebige Anzahl im Bereich von eins bis sechs, vorzugsweise zwei bis vier.

## Patentansprüche

1. Röhrenwärmeüberträger (2) zur unmittelbaren Wärmeübertragung zwischen wenigstens zwei Lebensmittelströmen (26; 30),
wobei der Röhrenwärmeüberträger (2) ein Mantelrohr (18) aufweist;
wobei der Röhrenwärmeüberträger (2) wenigstens ein im Innern des Mantelrohrs (18) angeordnetes Wärmeübertragungsrohr (6) aufweist;
wobei in dem wenigstens einen Wärmeübertragungsrohr (6) ein erster Lebensmittelstrom (26) führbar ist; und
wobei in einem Mantelraum (4) zwischen dem Mantelrohr (18) und dem wenigstens einen Wärmeübertragungsrohr (6) ein zweiter Lebensmittelstrom (30) führbar ist;
wobei der erste Lebensmittelstrom (26) und der zweite Lebensmittelstrom (30) durch wenigstens einen stirnseitigen Endabschnitt (1) des Röhrenwärmeüberträgers (2) separat führbar sind,
wobei der Endabschnitt (1) wenigstens eine erste Durchgangsöffnung (10) aufweist, die mit dem wenigstens einen Wärmeübertragungsrohr (6) in Fluidverbindung steht; und
der Endabschnitt (1) wenigstens eine zweite Durchgangsöffnung (15) aufweist, die mit dem Mantelraum (4) in Fluidverbindung steht
**dadurch gekennzeichnet, dass**
der Endabschnitt (1) des Röhrenwärmeüberträgers (2) hinsichtlich des ersten Lebensmittelstroms (26) in Ausströmrichtung aus dem Röhrenwärmeüberträger (2) gesehen als ein Strömungssammler ausgebildet ist, und/oder dass der Endabschnitt (1) des Röhrenwärmeüberträgers (2) hinsichtlich des ersten Lebensmittelstroms (26) in Einströmrichtung in den Röhrenwärmeüberträger (2) gesehen als ein Strömungsteiler ausgebildet ist.

2. Röhrenwärmeüberträger nach Anspruch 1, **dadurch gekennzeichnet, dass** ein Teilabschnitt (8) des wenigstens einen Endabschnitts (1) des Röhrenwärmeüberträgers (2) im Wesentlichen becherförmig, halbkugelförmig, kegelförmig, trichterförmig oder teilrotationsellipsoidförmig ausgebildet ist.

3. Röhrenwärmeüberträger nach wenigstens einem der Ansprüche 1 oder 2, **dadurch gekennzeichnet, dass**
der Röhrenwärmeüberträger (2) derart ausgebildet ist, dass er mit einem Doppelumlenkbogen (16), insbesondere nach wenigstens einem der Ansprüche 4 bis 6, in Fluidverbindung bringbar ist.

4. Doppelumlenkbogen (16) für Röhrenwärmeüberträger (2) zur unmittelbaren Wärmeübertragung zwischen wenigstens zwei Lebensmittelströmen (26; 30),
wobei der Doppelumlenkbogen (16) zwei getrennte Strömungswege (32; 34) aufweist;
wobei ein erster Lebensmittelstrom (26) im ersten Strömungsweg (32) des Doppelumlenkbogens (16) führbar ist;
wobei ein zweiter Lebensmittelstrom (30) im zweiten Strömungsweg (34) des Doppelumlenkbogens (16) führbar ist;
wobei zwischen den beiden Strömungswegen (32; 34) des Doppelumlenkbogens (16) Wärme übertragbar ist; und
wobei der erste Strömungsweg (32) innerhalb des zweiten Strömungswegs (34) angeordnet ist;
**dadurch gekennzeichnet, dass**
wenigstens ein Endabschnitt (48) des Doppelumlenkbogens (16) als ein Flansch (50) ausgebildet ist,
wobei der Flansch (50) wenigstens eine erste Durchgangsöffnung (52) aufweist, die mit dem ersten Strömungsweg (32) in Fluidverbindung steht;
der Flansch (50) wenigstens eine zweite Durchgangsöffnung (54) aufweist, die mit dem zweiten Strömungsweg (34) in Fluidverbindung steht; und
der Flansch (50) als Abstandhalter für einen den ersten Strömungsweg (32) begrenzenden inneren Rohrbogen (36) und einen den zweiten Strömungsweg (34) begrenzenden äußeren Rohrbogen (38) ausgebildet ist.

5. Doppelumlenkbogen nach Anspruch 4, **dadurch gekennzeichnet, dass**
der innere Rohrbogen (36) vom äußeren Rohrbogen (38) mittels wenigstens eines Abstandhalters (46) beabstandet ist, wobei der Abstandhalter (46) die beiden Rohrbögen (36; 38) wenigstens punktuell berührt, wobei
der Abstandhalter (46) vorzugsweise als wenigstens eine Rippe oder Finne ausgebildet ist.

6. Doppelumlenkbogen nach wenigstens einem der Ansprüche 4 oder 5, **dadurch gekennzeichnet, dass**
der Doppelumlenkbogen (16) derart ausgebildet ist, dass er mit wenigstens einem Röhrenwärmeüberträger (2), insbesondere nach wenigstens einem der Ansprüche 1 bis 3, in Fluidverbindung bringbar ist.

7. Adapter (56) für Röhrenwärmeüberträger (2) zur unmittelbaren Wärmeübertragung zwischen wenigstens zwei Lebensmittelströmen (26; 30),
wobei der Adapter (56) einen ersten Abschnitt (58) mit wenigstens einer Durchgangsöffnung (62) aufweist, die mit dem wenigstens einen Wärmeübertragungsrohr (6) des Röhrenwärmeüberträgers (2) in Fluidverbindung bringbar ist; und wobei der Adapter (56) einen zweiten Abschnitt (60) mit wenigstens einer Durchgangsöffnung (64) aufweist, die mit dem Mantelraum (4) des Röhrenwärmeüberträgers (2) in Fluidverbindung bringbar ist;
**dadurch gekennzeichnet, dass**
der erste Abschnitt (58) des Adapters (56) mit dem ersten Strömungsweg (32) eines Doppelumlenkbogens (16), insbesondere nach wenigstens einem der Ansprüche 4 bis 6, in Fluidverbindung bringbar ist;
der zweite Abschnitt (60) des Adapters (56) mit dem zweiten Strömungsweg (34) des Doppelumlenkbogens (16), insbesondere nach wenigstens einem der Ansprüche 4 bis 6, in Fluidverbindung bringbar ist.

8. Adapter nach Anspruch 7, **dadurch gekennzeichnet, dass**
der erste Abschnitt (58) und/oder der zweite Abschnitt (60) des Adapters (56) in Ausströmrichtung aus dem Röhrenwärmeüberträger (2) gesehen als ein Strömungssammler ausgebildet ist, und/oder dass
der erste Abschnitt (58) und/oder der zweite Abschnitt (60) des Adapters (56) in Einströmrichtung in den Röhrenwärmeüberträger (2) gesehen als ein Strömungsteiler ausgebildet ist.

9. Adapter nach wenigstens einem der Ansprüche 7 oder 8, **dadurch gekennzeichnet, dass**
der erste Abschnitt (58) und/oder der zweite Abschnitt (60) des Adapters (56) in Einströmrichtung in den Röhrenwärmeüberträger (2) gesehen im Wesentlichen becherförmig, halbkugelförmig, kegelförmig, trichterförmig oder teilrotationsellipsoidförmig ausgebildet ist.

10. System (66) zur unmittelbaren Wärmeübertragung zwischen wenigstens zwei Lebensmittelströmen (26; 30),
wobei das System (66) wenigstens einen Röhrenwärmeüberträger (2) nach wenigstens einem der Ansprüche 1 bis 3 aufweist; und
wobei das System (66) wenigstens einen Doppelumlenkbogen (16) nach wenigstens einem der Ansprüche 4 bis 6 aufweist.

11. System nach Anspruch 10, **dadurch gekennzeichnet, dass**
der erste Strömungsweg (32) und/oder der zweite Strömungsweg (34) des Doppelumlenkbogens (16) gegenüber dem wenigstens einen Wärmeübertragungsrohr (6) des Röhrenwärmeüberträgers (2) verschiebbar gelagert sind/ist, wobei das System (66) vorzugsweise wenigstens einen Adapter (56), insbesondere nach wenigstens einem der Ansprüche 7 bis 9, aufweist.

12. Verfahren zur unmittelbaren Wärmeübertragung zwischen wenigstens zwei Lebensmittelströmen (26; 30),
wobei die Wärme oder Kälte von einem ersten Lebensmittelstrom (26) auf einen zweiten Lebensmittelstrom (30) unmittelbar übertragen wird;
wobei der erste Lebensmittelstrom (26) in wenigstens einem Wärmeübertragungsrohr (6) eines Röhrenwärmeüberträgers (2), insbesondere nach wenigstens einem der Ansprüche 1 bis 3, geführt wird;
wobei der zweite Lebensmittelstrom (30) in einem Mantelraum (4) des Röhrenwärmeüberträgers (2) geführt wird;
wobei der Mantelraum (4) zwischen einem Mantelrohr (18) und dem wenigstens einen Wärmeübertragungsrohr (6) ausgebildet ist;
wobei der erste Lebensmittelstrom (26) in einem ersten Strömungsweg (32) eines Doppelumlenkbogens (16), insbesondere nach wenigstens einem der Ansprüche 4 bis 6, geführt wird;
wobei der zweite Lebensmittelstrom (30) in einem zweiten Strömungsweg (34) des Doppelumlenkbogens (16) geführt wird; und
wobei zwischen dem ersten Lebensmittelstrom (26) im ersten Strömungsweg (32) und dem zweiten Lebensmittelstrom (30) im zweiten Strömungsweg (34) Wärme übertragen wird;
wobei der erste Lebensmittelstrom (26) beim Einströmen in den ersten Strömungsweg (32) des Doppelumlenkbogens (16), insbesondere mittels eines Endabschnitts (1) des Röhrenwärmeüberträgers (2) oder eines Adapters (56), insbesondere nach wenigstens einem der Ansprüche 7 bis 9, zu einem Strom zusammengefasst wird; und/oder
wobei der erste Lebensmittelstrom (26) beim Ausströmen aus dem ersten Strömungsweg (32) des Doppelumlenkbogens (16), insbesondere mittels des Endabschnitts (1) des Röhrenwärmeüberträgers (2) oder des Adapters (56), in wenigstens einen Teilstrom aufgeteilt wird.

13. Verfahren nach Anspruch 12, **dadurch gekennzeichnet, dass**
die Wärme ohne Verwendung eines Wärmespeichers oder Wärmeträgers übertragen wird, insbesondere der erste Strömungsweg (32) und/oder der zweite Strömungsweg (34) des Doppelumlenkbogens (16) gegenüber dem wenigstens einen Wärmeübertragungsrohr (6) verschiebbar sind/ist.

## Claims

1. Tube heat exchanger (2) for direct heat transfer between at least two flows of food (26; 30),
wherein the tube heat exchanger (2) has a casing tube (18);
wherein the tube heat exchanger (2) has at least one heat transfer tube (6) arranged inside the casing tube (18);
wherein a first flow of food (26) can be conveyed in the at least one heat transfer tube (6); and
wherein a second flow of food (30) can be conveyed in an casing space (4) between the casing tube (18) and the at least one heat transfer tube (6);
wherein the first flow of food (26) and the second flow of food (30) can be conveyed separately through at least one frontal end portion (1) of the tube heat exchanger (2),
wherein the end portion (1) has at least one first through opening (10) which is fluidically connected to the at least one heat transfer tube (6); and
the end portion (1) has at least one second through opening (15) which is fluidically connected to the casing space (4),
**characterised in that**
with respect to the first flow of food (26), viewed in the outflow direction out of the tube heat exchanger (2), the end portion (1) of the tube heat exchanger (2) is designed as a flow collector, and/or **in that**
with respect to the first flow of food (26), viewed in the inflow direction into the tube heat exchanger (2), the end potion (1) of the tube heat exchanger (2) is designed as a flow divider.

2. Tube heat exchanger according to claim 1, **characterised in that** a section (8) of the at least one end portion (1) of the tube heat exchanger (2) is substantially cup-shaped, semi-spherical, conical, funnel-shaped or part-rotated ellipsoidal.

3. Tube heat exchanger according to at least one of claims 1 or 2, **characterised in that**
the tube heat exchanger (2) is designed in such a way that it can be brought into fluidic connection with a double deflecting bend (16), in particular according to at least one of claims 4 to 6.

4. Double deflecting bend (16) for tube heat exchanger (2) for direct heat transfer between at least two flows of food (26; 30),
wherein the double deflecting bend (16) has two separate flow paths (32; 34),
wherein a first flow of food (26) can be conveyed in the first flow path (32) of the double deflecting bend (16),
wherein a second flow of food (30) can be conveyed in the second flow path (34) of the double deflecting bend (16);
wherein heat can be transferred between the two flow paths (32; 34) of the double deflecting bend (16); and
wherein the first flow path (32) is arranged inside the second flow path (34); **characterised in that**
at least one end portion (48) of the double deflecting bend (16) is designed as a flange (50),
wherein the flange (50) has at least one first through opening (52) which is fluidically connected to the first flow path (32);
the flange (50) has at least one second through opening (54) which is fluidically connected to the second flow path (34); and
the flange (50) is designed as a spacer for an inner tube bend (36) delimiting the first flow path (32) and an outer tube bend (38) delimiting the second flow path (34).

5. Double deflecting bend according to claim 4, **characterised in that**
the inner tube bend (36) is spaced apart from the outer tube bend (38) by means of at least one spacer (46), wherein the spacer (46) touches the two tube bends (36; 38) at least at certain points, wherein
the spacer (46) is preferably designed as at least one rib or fin.

6. Double deflecting bend according to at least one of claims 4 or 5, **characterised in that**
the double deflecting bend (16) is designed in such a way that it can be brought into fluidic connection with at least one tube heat exchanger (2), in particular according to at least one of claims 1 to 3.

7. Adapter (56) for tube heat exchanger (2) for direct heat transfer between at least two flows of food (26; 30),
wherein the adapter (56) has a first section (58) with at least one through opening (62) which can be brought into fluidic connection with the at least one heat transfer tube (6) of the tube heat exchanger (2); and
wherein the adapter (56) has a second section (60) with at least one through opening (64) which can be brought into fluidic connection with the casing space (4) of the tube heat exchanger (2);
**characterised in that**
the first section (58) of the adapter (56) can be brought into fluidic connection with the first flow path (32) of a double deflecting bend (16), in particular according to at least one of claims 4 to 6;
the second section (60) of the adapter (56) can be brought into fluidic connection with the second flow path (34) of the double deflecting bend (16), in particular according to at least one of claims 4 to 6.

8. Adapter according to claim 7, **characterised in that**
viewed in the outflow direction out of the tube heat exchanger (2), the first section (58) and/or the second section (60) of the adapter (56) is/are designed as a flow collector, and/or **in that**
viewed in the inflow direction into the tube heat exchanger (2), the first section (58) and/or the second section (60) of the adapter (56) is/are designed as a flow divider.

9. Adapter according to at least one of claims 7 or 8, **characterised in that**
viewed in the inflow direction into the tube heat exchanger (2), the first section (58) and/or the second section (60) of the adapter (56) is/are substantially cup-shaped, semi-spherical, conical, funnel-shaped or part-rotated ellipsoidal.

10. System (66) for direct heat transfer between at least two flows of food (26; 30),
wherein the system (66) has at least one tube heat exchanger (2) according to at least one of claims 1 to 3; and
wherein the system (66) has at least one double deflecting bend (16) according to at least one of claims 4 to 6.

11. System according to claim 10, **characterised in that**
the first flow path (32) and/or the second flow path (34) of the double deflecting bend (16) is/are displaceably mounted with respect to the at least one heat transfer tube (6) of the tube heat exchanger (2), wherein
the system (66) preferably has at least one adapter (56), in particular according to at least one of claims 7 to 9.

12. Method for direct heat transfer between at least two flows of food (26; 30),
wherein the heat or cold from a first flow of food (26) is directly transferred to a second flow of food (30);
wherein the first flow of food (26) is conveyed in at least one heat transfer tube (6) of a tube heat exchanger (2), in particular according to at least one of claims 1 to 3;
wherein the second flow of food (30) is conveyed in a casing space (4) of the tube heat exchanger (2);
wherein the casing space (4) is constructed between a casing tube (18) and the at least one heat transfer tube (6);
wherein the first flow of food (26) is conveyed in a first flow path (32) of a double deflecting bend (16), in particular according to at least one of claims 4 to 6;
wherein the second flow of food (30) is conveyed in a second flow path (34) of the double deflecting bend (16); and
wherein heat is transferred between the first flow of food (26) in the first flow path (32) and the second flow of food (30) in the second flow path (34);
wherein, as it flows into the first flow path (32) of the double deflecting bend (16), in particular by means of an end portion (1) of the tube heat exchanger (2) or an adapter (56), in particular according to one of claims 7 to 9, the first flow of food (26) is combined to form a flow; and/or
wherein, as it flows out of the first flow path (32) of the double deflecting bend (16), in particular by means of the end portion (1) of the tube heat exchanger (2) or adapter (56), the first flow of food (26) is divided into at least one partial flow.

13. Method according to claim 12, **characterised in that**
the heat is transferred without the use of a heat store or heat carrier, and the first flow path (32) and/or the second flow path (34) of the double deflecting bend (16) can in particular be displaced with respect to the at least one heat transfer tube (6).

## Revendications

1. Echangeur de chaleur à tubes (2) pour l'échange de chaleur direct entre au moins deux flux de produits alimentaires (26; 30),
l'échangeur de chaleur à tubes (2) comprenant un tube-enveloppe (18) ;
l'échangeur de chaleur à tubes (2) comprenant au moins un tube d'échange de chaleur (6) agencé à l'intérieur du tube-enveloppe (18) ;
un premier flux de produits alimentaires (26) pouvant être véhiculé et guidé dans ledit au moins un tube d'échange de chaleur (6) ; et
un deuxième flux de produits alimentaires (30) pouvant être véhiculé et guidé dans un espace d'enveloppe (4) entre le tube-enveloppe (18) et ledit au moins un tube d'échange de chaleur (6) ;
le premier flux de produits alimentaires (26) et le deuxième flux de produits alimentaires (30) pouvant être guidés séparément à travers au moins une partie d'extrémité (1) frontale de l'échangeur de chaleur à tubes (2),
la partie d'extrémité (1) présentant au moins une première ouverture de passage (10), qui est en liaison fluidique avec ledit au moins un tube d'échange de chaleur (6) ; et
la partie d'extrémité (1) présentant au moins une deuxième ouverture de passage (15), qui est en liaison fluidique avec l'espace d'enveloppe (4),
**caractérisé en ce que**
la partie d'extrémité (1) de l'échangeur de chaleur à tubes (2) est, quant au premier flux de produits alimentaires (26), réalisée comme un collecteur de flux vu dans la direction de sortie de flux de l'échangeur de chaleur à tubes (2), et/ **en ce que**
la partie d'extrémité (1) de l'échangeur de chaleur à tubes (2) est, quant au premier flux de produits alimentaires (26), réalisée comme un séparateur de flux vu dans la direction d'entrée de flux dans l'échangeur de chaleur à tubes (2).

2. Echangeur de chaleur à tubes selon la revendication 1, **caractérisé en ce**
**qu'**une partie partielle (8) de ladite au moins une partie d'extrémité (1) de l'échangeur de chaleur à tubes (2) est d'une configuration sensiblement en forme de godet, de forme demi-sphérique, de forme conique, en forme de trémie ou en forme d'ellipsoïde de rotation partiel.

3. Echangeur de chaleur à tubes selon l'une au moins des revendications 1 ou 2, **caractérisé en ce que** l'échangeur de chaleur à tubes (2) est réalisé de manière à pouvoir être mis en liaison fluidique avec un arc double de déflexion (16), notamment selon l'une au moins des revendications 4 à 6.

4. Arc double de déflexion (16) pour échangeur de chaleur à tubes (2) destiné à l'échange de chaleur direct entre au moins deux flux de produits alimentaires (26; 30),
l'arc double de déflexion (16) comprenant deux parcours de flux (32; 34) séparés ;
un premier flux de produits alimentaires (26) pouvant être véhiculé et guidé dans le premier parcours de flux (32) de l'arc double de déflexion (16) ;
un deuxième flux de produits alimentaires (30) pouvant être véhiculé et guidé dans le deuxième parcours de flux (34) de l'arc double de déflexion (16) ;
de la chaleur pouvant être échangée entre les deux parcours de flux (32; 34) de l'arc double de déflexion (16) ; et
le premier parcours de flux (32) étant agencé à l'intérieur du deuxième parcours de flux (34) ; **caractérisé en ce que**
au moins une partie d'extrémité (48) de l'arc double de déflexion (16) est réalisée en tant que flasque (50),
le flasque (50) présentant au moins une première ouverture de passage (52), qui est en liaison fluidique avec le premier parcours de flux (32) ;
le flasque (50) présentant au moins une deuxième ouverture de passage (54), qui est en liaison fluidique avec le deuxième parcours de flux (34) ; et
le flasque (50) étant réalisé en tant qu'entretoise d'espacement pour un arc de tube intérieur (36) délimitant le premier parcours de flux (32) et un arc de tube extérieur (38) délimitant le deuxième parcours de flux (34).

5. Arc double de déflexion selon la revendication 4, **caractérisé en ce que**
l'arc de tube intérieur (36) est espacé de l'arc de tube extérieur (38) au moyen d'au moins une entretoise d'espacement (46), l'entretoise d'espacement (46) étant en contact au moins ponctuel avec les deux arcs de tube (36; 38),
l'entretoise d'espacement (46) étant de préférence réalisée sous la forme d'au moins d'une nervure ou panne mince.

6. Arc double de déflexion selon l'une au moins des revendications 4 ou 5, **caractérisé en ce que**
l'arc double de déflexion (16) est configuré de manière à pouvoir être mis en liaison fluidique avec au moins un échangeur de chaleur à tubes (2), notamment selon l'une au moins des revendications 1 à 3.

7. Adaptateur (56) pour échangeur de chaleur à tubes (2) destiné à l'échange de chaleur direct entre au moins deux flux de produits alimentaires (26; 30),
l'adaptateur (56) présentant une première partie (58) avec au moins une ouverture de passage (62), qui peut être mise en liaison fluidique avec ledit au moins un tube d'échange de chaleur (6) de l'échangeur de chaleur à tubes (2) ; et
l'adaptateur (56) présentant une deuxième partie (60) avec au moins une ouverture de passage (64), qui peut être mise en liaison fluidique avec l'espace d'enveloppe (4) de l'échangeur de chaleur à tubes (2) ;
**caractérisé en ce que**
la première partie (58) de l'adaptateur (56) peut être mise en liaison fluidique avec le premier parcours de flux (32) d'un arc double de déflexion (16), notamment selon l'une au moins des revendications 4 à 6 ;
la deuxième partie (60) de l'adaptateur (56) peut être mise en liaison fluidique avec le deuxième parcours de flux (34) de l'arc double de déflexion (16), notamment selon l'une au moins des revendications 4 à 6.

8. Adaptateur selon la revendication 7, **caractérisé en ce que**
la première partie (58) et/ou la deuxième partie (60) de l'adaptateur (56) est réalisée comme un collecteur de flux, vu dans la direction de sortie de flux de l'échangeur de chaleur à tubes (2), et/ **en ce que**
la première partie (58) et/ou la deuxième partie (60) de l'adaptateur (56) est réalisée comme un séparateur de flux, vu dans la direction d'entrée de flux dans l'échangeur de chaleur à tubes (2).

9. Adaptateur selon l'une au moins des revendications 7 ou 8, **caractérisé en ce que**
la première partie (58) et/ou la deuxième partie (60) de l'adaptateur (56) est, vu dans la direction d'entrée de flux dans l'échangeur de chaleur à tubes (2), d'une configuration sensiblement en forme de godet, de forme demi-sphérique, de forme conique, en forme de trémie ou en forme d'ellipsoïde de rotation partiel.

10. Système (66) destiné à l'échange de chaleur direct entre au moins deux flux de produits alimentaires (26; 30),
le système (66) présentant au moins un échangeur de chaleur à tubes (2) selon l'une au moins des revendications 1 à 3 ; et
le système (66) présentant au moins un arc double de déflexion (16) selon l'une au moins des revendications 4 à 6.

11. Système selon la revendication 10, **caractérisé en ce que**
le premier parcours de flux (32) et/ou le deuxième parcours de flux (34) de l'arc double de déflexion (16) sont/est monté(s) de manière coulissante par rapport au dit au moins un tube d'échange de chaleur (6) de l'échangeur de chaleur à tubes (2),
le système (66) présentant de préférence au moins un adaptateur (56), notamment selon l'une au moins des revendications 7 à 9.

12. Procédé pour assurer un échange de chaleur direct entre au moins deux flux de produits alimentaires (26; 30), procédé selon lequel
la chaleur ou le froid est transféré directement d'un premier flux de produits alimentaires (26) à un deuxième flux de produits alimentaires (30) ;
le premier flux de produits alimentaires (26) est véhiculé et guidé dans au moins un tube d'échange de chaleur (6) d'un échangeur de chaleur à tubes (2), notamment selon l'une au moins des revendications 1 à 3 ;
le deuxième flux de produits alimentaires (30) est véhiculé et guidé dans un espace d'enveloppe (4) de l'échangeur de chaleur à tubes (2) ;
l'espace d'enveloppe (4) est formé entre un tube-enveloppe (18) et ledit au moins un tube d'échange de chaleur (6) ;
le premier flux de produits alimentaires (26) est véhiculé et guidé dans un premier parcours de flux (32) d'un arc double de déflexion (16), notamment selon l'une au moins des revendications 4 à 6 ;
le deuxième flux de produits alimentaires (30) est véhiculé et guidé dans un deuxième parcours de flux (34) de l'arc double de déflexion (16) ; et
de la chaleur est transférée ou échangée entre le premier flux de produits alimentaires (26) dans le premier parcours de flux (32) et le deuxième flux de produits alimentaires (30) dans le deuxième parcours de flux (34) ;
lors de l'entrée dans le premier parcours de flux (32) de l'arc double de déflexion (16), le premier flux de produits alimentaires (26) est regroupé en un flux unique, notamment au moyen d'une partie d'extrémité (1) de l'échangeur de chaleur à tubes (2), ou d'un adaptateur (56), notamment selon l'une au moins des revendications 7 à 9 ; et/ou
lors de la sortie du premier parcours de flux (32) de l'arc double de déflexion (16), le premier flux de produits alimentaires (26) est subdivisé en au moins un flux partiel, notamment au moyen de la partie d'extrémité (1) de l'échangeur de chaleur à tubes (2) ou de l'adaptateur (56).

13. Procédé selon la revendication 12, **caractérisé en ce que**
la chaleur est échangée ou transférée sans utilisation d'un accumulateur de chaleur ou d'un caloporteur, et en particulier le premier parcours de flux (32) et/ou le deuxième parcours de flux (34) de l'arc double de déflexion (16) sont/est coulissants par rapport au dit au moins un tube d'échange de chaleur (6).
